# EUROPEAN PATENT APPLICATION

(11) **EP 2 704 060 A2**
(43) Date of publication of application: **05.03.2014**
(21) Application number: 13182863.4
(22) Date of filing: 03.09.2013
(51) Int. Cl.: G06K 9/00

(54) **Crowd density estimation**

(30) Priority: 03.09.2012 GB 201215678
(71) Applicant: Vision Semantics Limited, London E1 4NS (GB)
(72) Inventor: The designation of the inventor has not yet been filed
(74) Representative: Boult Wade Tennant

(57) **Abstract**

Method and procedures for automated counting of number of persons (or objects) in a scene monitored by a surveillance camera. A semi-supervised procedure (active learning) for constructing a count distribution manifold to extrapolate labels (inference of counts) from very large unlabelled data points with the assistance of human-labelled counts from a very small labelled data set. Receiving a label, signal or other indication from a user. Identifying the most informative data point or points with a known label (count). Constructing a regression model using the user labelled data and inference-labelled data. With or without a user's selection of targeted zones in a scene and targeted unseen video data, inferring/predicting (estimating) the counts of persons (or objects) in the unseen data in the entire scene or in the selected zones individually and/or accumulatively.

## Description

### Field of the Invention

The present invention is related to the field of visual surveillance. In particular, the present invention relates to the automated counting of number of persons (or objects) in a scene monitored by a surveillance camera.

### Background of the Invention

Video imagery based crowd density estimation in public spaces can be a highly effective tool for establishing global situational awareness. Counting by regression deliberately avoids actual segregation of individual or tracking of features but estimates the crowd density based on holistic and collective description of crowd patterns. Since neither explicit segmentation nor tracking of individuals are involved, counting by regression becomes a highly practical method for crowded environments where detection and tracking are severely limited intrinsically.

Conventional apparatus and methods based on counting by regression require a user to provide a large amount of annotated samples, e.g. dotted annotations on head or pedestrian positions in hundreds of frames, to train the system. This requirement of exhaustive supervision is not practical given a complex scene and a large number of cameras.

Therefore, there is required a tractable method, framework and system that overcomes these problems.

### Summary of the Invention

Against this background and in accordance with a first aspect there is provided a method for estimating the density, size and/or number of people within a group or crowd from a video source, the method comprising the steps of: determining using an active learning algorithm to quantify and nominate a candidate for the most informative data point or points; receiving a label, signal or other indication from a user for selecting or identifying data of the most informative data point or points; applying a regression function to the determined most informative point and label to minimise a loss on the labelled data; and constructing a regression model using the user labelled data and inference-labelled data.

In accordance with a second aspect there is provided a system for estimating the density, size and/or number of people within a group or crowd, the system comprising: a video source; and logic configured to: extract one or more features from the video source; bring to the same scale objects within the video source perceived at different depths; determine using an active learning algorithm a candidate for the most informative data point or points; receive a label, signal or other indication from a user of the most informative data point or points; apply a regression function to the determined most informative point and label to minimise a loss on the labelled data; and construct a regression model using the user labelled data and inference-labelled data (e.g. automatic or computer labelled data).

Many real-world data distributions are underpinned by a low-dimensional manifold. Data distributions of crowd patterns observed visually form a structured manifold due to the inherent generating process induced by individual interactions, physical layout of a scene, and social regulations. It is observed that the crowd density (number of person) varies smoothly within such a manifold space. In other words, there is a clear identifiable relation between distribution of low-level visual features p(x) and the conditional distribution of person count given the features, p(y|x). The smooth manifold is exploited to relax laborious manual annotation in a regression model estimation.

Described is a system for the automatic visual estimation of crowd size or density from surveillance video feeds for global situational awareness such as during emergency evacuation scenarios, and which may be easily configured by a human operator for different environments. The invention comprises four key components: (1) an extractor of low-level visual features from video imagery for constructing an intermediate representation for higher-level processing; (2) a geometric-correction module to compensate for perspective distortions in commonly encountered surveillance views and alleviate estimation inaccuracies; (3) an active learning system for automatically determining the most salient data points during system training and presenting it to the human user through a graphical user interface for labelling and incremental model refinement; and (4) a semi-supervised learning system to extrapolate labels for all data points given only a sparse human-labelled set. These components together form an interactive system for crowd density estimation applications in diverse crowding scenarios.

The method may provide:
1. low-dimensional crowd manifold learning to discover the underlying structure of crowd patterns;
2. a semi-supervised learning system that exploits crowd manifold to extrapolate labels for all data points from only a priori sparse human-labelled set; and/or
3. an active learning system for automatically determining the most salient data points during system training and presenting it to the human user through a graphical user interface for further on-the-fly human labelling/feedback and incremental model refinement.

The methods described above may be implemented as a computer program comprising program instructions to operate a computer. The computer program may be stored on a computer-readable medium.

It should be noted that any feature described herein may be used with any particular aspect or embodiment of the invention.

### Brief description of the Figures

The present invention may be put into practice in a number of ways and embodiments will now be described by way of example only and with reference to the accompanying drawing, in which:

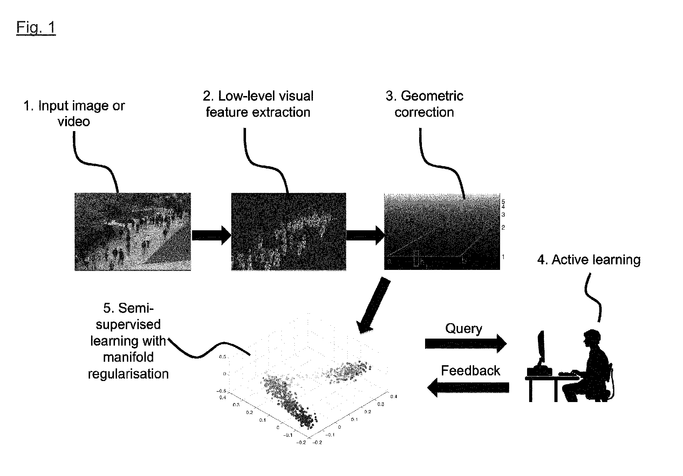

FIG. 1 shows a schematic diagram of a process for estimating crowd density, given by way of example only.

It should be noted that the figure is illustrated for simplicity and are not necessarily drawn to scale.

### Detailed description of the preferred embodiments

A goal of this invention is to reduce the effort of manual annotation through semi-supervised learning with manifold regularisation, i.e. to exploits the inherent geometry properties of unlabelled data probability distributions. However, semi-supervised learning without careful labelled data selection may lead to suboptimal performance.

This invention may be used especially in situations in which some form of prior information is available to help in guiding the choice of labelled points for semi-supervised learning. Such a priori information may come from a human user interactively or from other forms of pre-recorded knowledge. For crowd counting, a user may label manually a small number of data instances for semi-supervised learning, our design enables the learning algorithm to tell us which data to label, rather than selecting them randomly. We call this process of automatic mining of most informative crowd data points for human labelling as active learning of crowd density distributions.

Key components - embodiments of the invention may combine both active learning and semi-supervised learning for automated crowd counting with reduced supervision. Specifically, the embodiments of the invention may comprise four components (see figure 1):
1. Low-level visual feature extraction (node 2)
2. Geometric correction (node 3)
3. Active learning (node 4)
4. Semi-supervised regression (node 5)

The first component (node 2) concerns the extraction, selection, and transformation of low-level visual properties in an image or video (node 1) to construct a suitable intermediate input representation to a regression model. Different features with complementary nature can be combined to form a large bank of features. Each video frame may be partitioned into different regions. In each region different imagery features can be extracted [1]. Examples of features include (a) segment-based features: foreground area, total number of pixels of the foreground perimeter, perimeter-area ratio, and histogram of perimeter edge orientation; (b) structural-based features: total number of edge pixels, histogram of the edge orientation; (c) local texture features: gray level co-occurrence matrix and local binary patterns. Other features may be used. All images may be transformed into grayscale prior to feature extraction.

A problem commonly encountered in counting by regression framework is perspective distortion, in which far objects appear smaller than those closer to the camera view [2]. As a consequence, features extracted from the same object at different depths of the scene would have huge difference in values. The influence is less critical if one divides the image space into different cells, each of which modelled by a regression function; erroneous results are expected if one only uses a single regression function for the whole image space. To address this problem, the second component (node 3) performs geometric correction or perspective normalisation to bring perceived size of objects at different depths to the same scale. Specifically, a user will provide four points in the image space to form a quadrilateral that corresponds to a rectangle. The lengths of the two horizontal lines of the quadrilateral, ab and cd, are measured respectively. When a reference pedestrian (or object) passes the two extremes, i.e. its bounding box's centre touches the ab and cd, its heights are recorded. The weights at ab and cd are then assigned. To determine the remaining weights of the scene, linear interpolation is first performed on the width of the rectangle, and the height of the reference person. A weight at arbitrary image coordinate can then be calculated. When applying the weights to features, it may be assumed that the size of foreground segment changes quadratically, whilst the total edge pixels may change linearly with respect to the perspective. Consequently, each foreground segment pixel may be weighted using the original weight and the edge features may be weighted by square-roots of the weights. It should be noted that other geometric correction approaches may be employed.

In the third component (node 4), the active learning algorithm discovers automatically the most (or at least an important or significant) informative point and requests a label from a human user or perhaps uses stored information or another system. Different active learning algorithms can be used. For instance, the component may measure the label propagation energy in the low-dimensional manifold space. The unlabelled data point that requires highest energy to reach any of the labelled points will then be requested. Alternatively, the component may select queries from the unlabelled data pool to minimise the variance of model's parameters [3]. Other techniques may be used.

The requested label together with the point is used in the fourth component (node 5) for semi-supervised learning. Semi-supervised learning is a machine learning method that utilises both labelled and unlabelled training data, typically a small amount of labelled data with a large amount of unlabelled data. The semi-supervised learning algorithm is formulated as a regression function to minimise the loss on the labelled data regularised by the manifold of the unlabelled data. The key idea is that the regression function can be effectively and robustly estimated from the few labelled samples, with the guide of the estimation of a manifold. A user only labels a small set of data points (sparse) from a huge unlabelled crowd data pool. The labels of the rest of the unlabelled points (exhaustive) are determined automatically through solving a sparse linear system. The final regression model will then be constructed based on all the data including the sparse human-labelled data and the exhaustive machine-inference-labelled data. An example of a semi-supervised algorithm is Manifold-Regularized Support Vector Machine, or Laplacian Support Vector Machines [4].

Brief description of the interface and usage - In one embodiment a surveillance system may comprise a surveillance camera and a computer having a monitor, input devices such as keyboard and mouse for human interactions, and the person counting software system, for example.

The surveillance camera will capture a video of a scene. The system will trigger the active learning routine to automatically select a frame at a time to obtain annotation from a user. A window will be used to present the selected frame on the system monitor. The user will then calculate the number of person in that frame and use the input devices to enter the number to the system. The label requesting and labelling steps will iterate one or more times until the system reaches a predefined stopping criterion or the user decides to stop the learning process.
1) Low-level feature extraction (see appendix A):
   Given a video frame, a partition of a frame may be made into K cell regions (see Step-3 in Figure 2 of the appendix A). Extraction of low-level imagery features from each cell region may be made and these combined into an intermediate feature vector. Example types of features include: (a) Segment-based features: foreground area, total number of pixels of the foreground perimeter, perimeter-area ratio, and histogram of perimeter edge orientation; (b) Structural-based features:
   total number of edge pixels, histogram of the edge orientation, and the Minkowski dimension; (c) Local texture features: Gray Level Co-occurrence Matrix (GLCM). Note that all images may be transformed to grayscale prior to feature extraction.
2) Geometric correction (see appendix B):
   The method first determines four points in a scene to form a quadrilateral that corresponds to a rectangle (see Figure 7 of appendix B). The lengths of the two horizontal lines of the quadrilateral, ab and cd, are measured respectively. When a reference pedestrian (for example) passes the two extremes, i.e. its bounding box's centre touches the ab and cd, its heights are recorded. The weights at ab and cd are then assigned. To determine the remaining weights of the scene, linear interpolation is first performed on the width of the rectangle, and the height of the reference person. A weight at arbitrary image coordinate can then be calculated. Here an assumption may be made that the horizontal vanishing line to be parallel to the image horizontal scan lines. When applying the weights to features, it may be assumed that the size of foreground segment changes quadratically, whilst the total edge pixels changes linearly with respect to the perspective.
   Consequently, each foreground segment pixel is weighted using the original weight and the edge features are weighted by square-roots of the weights.
3) Semi-supervised learning:
   Semi-supervised learning is a machine learning method that utilises both labelled and unlabelled training data, typically a small amount of labelled data with a large amount of unlabelled data. Semi-supervised learning is attractive when learning with sparse labelled data, supported by large body of unlabelled/unknown data through the means of regularisation by leveraging the manifold of the unlabelled data, i.e. estimating the structure of unlabelled data distribution. The key idea is that classification boundaries can be effectively and robustly estimated from the few labelled samples, with the guide of the estimation of a manifold. A good example of a semi-supervised algorithm is Manifold-Regularized Support Vector Machine, or Laplacian Support Vector Machines [4].
   As will be appreciated by the skilled person, details of the above embodiment may be varied without departing from the scope of the present invention, as defined by the appended claims.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

Specific techniques mentioned above are described in more detail in the following references.

### References:

[1] C. C. Loy, T. Xiang and S. Gong. Incremental Activity Modelling in Multiple Disjoint Cameras. IEEE Transactions on Pattern Analysis and Machine Intelligence, Vol. 34, No. 9, pp. 1799-1813, September 2012.
[2] R. Ma, L. Li, W. Huang, Q. Tian. On Pixel Count Based Crowd Density Estimation for Visual Surveillance. IEEE Conference on Cybernetics and Intelligent Systems, Vol. 1, pp. 170-173, 2004.
[3] A. C. Atkinson and A. N. Donev. Optimum Experimental Designs. Oxford, U.K.: Oxford Univ. Press, 2007.
[4] S. Melacci and M. Belkin. Laplacian Support Vector Machines Trained in the Primal. Journal of Machine Learning Research, Vol. 12, pp. 1149-1184, March 2011.

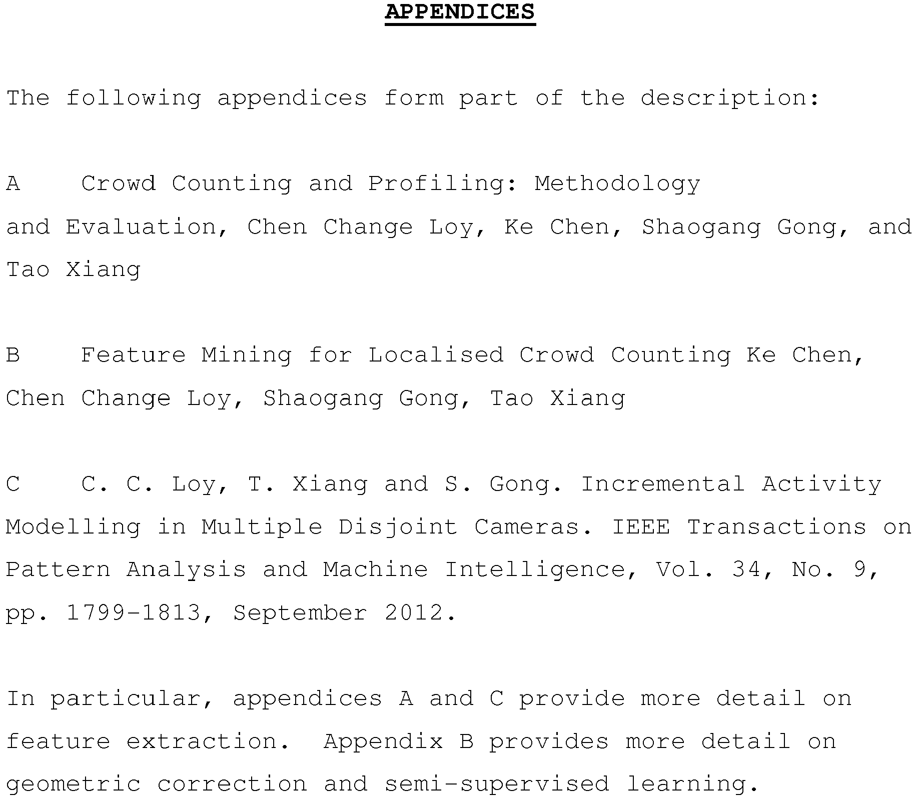

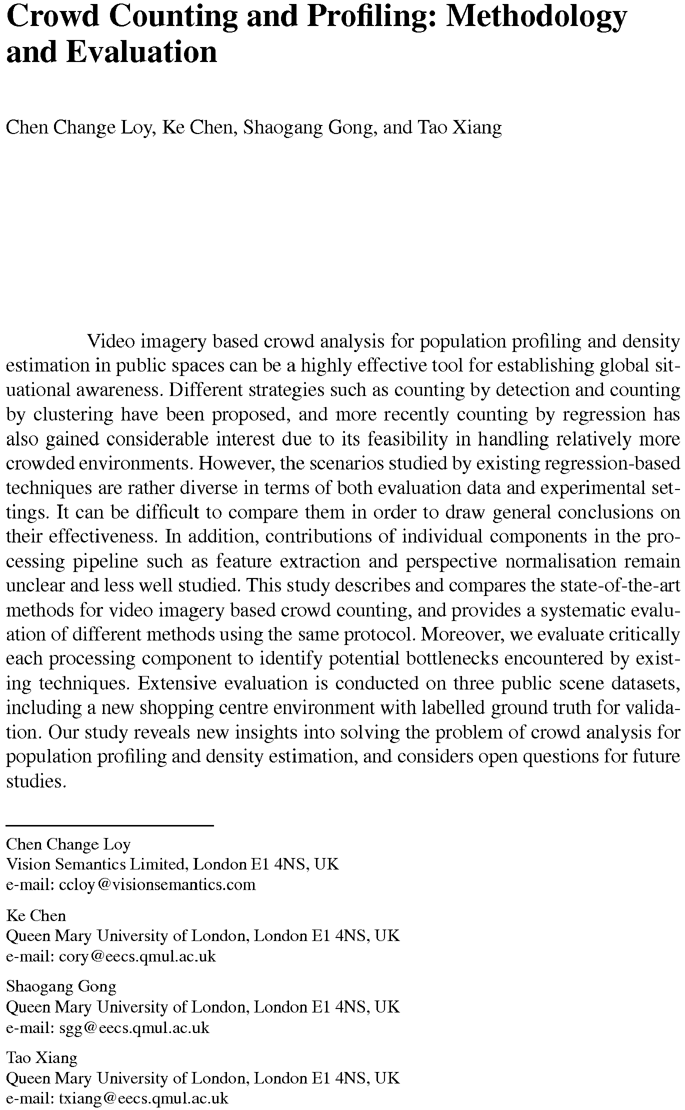

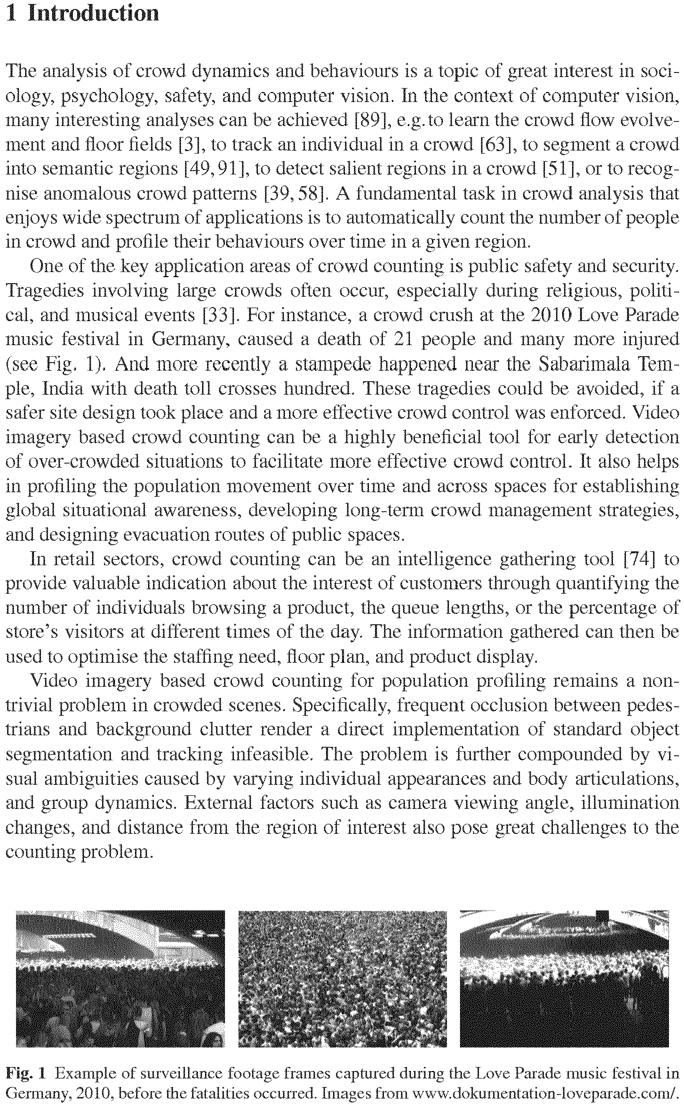

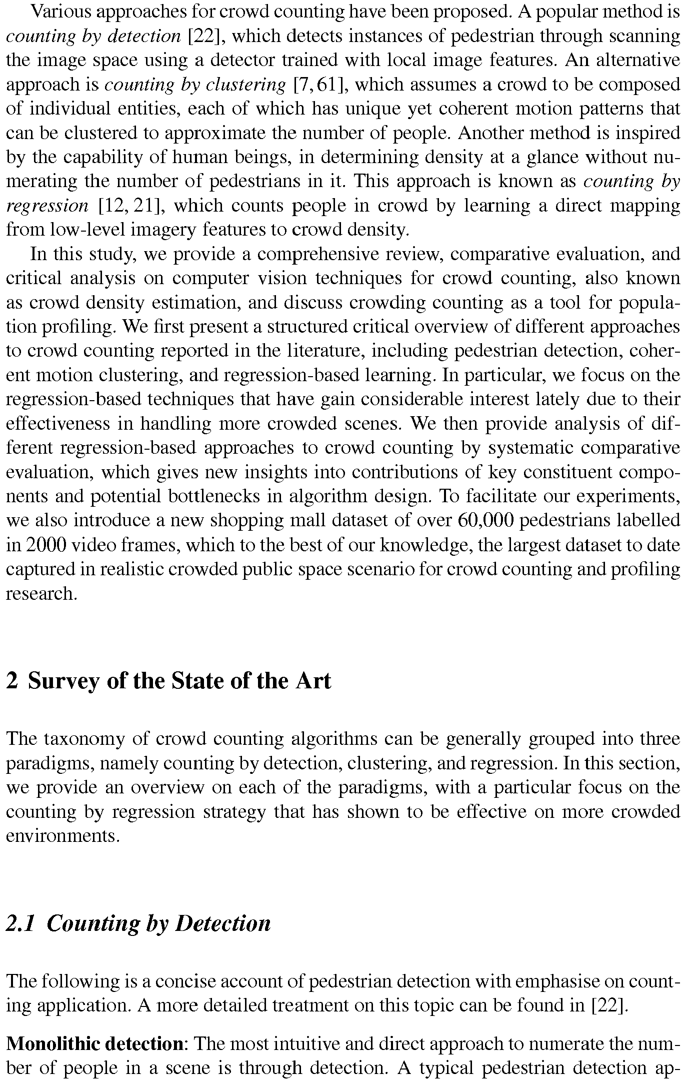

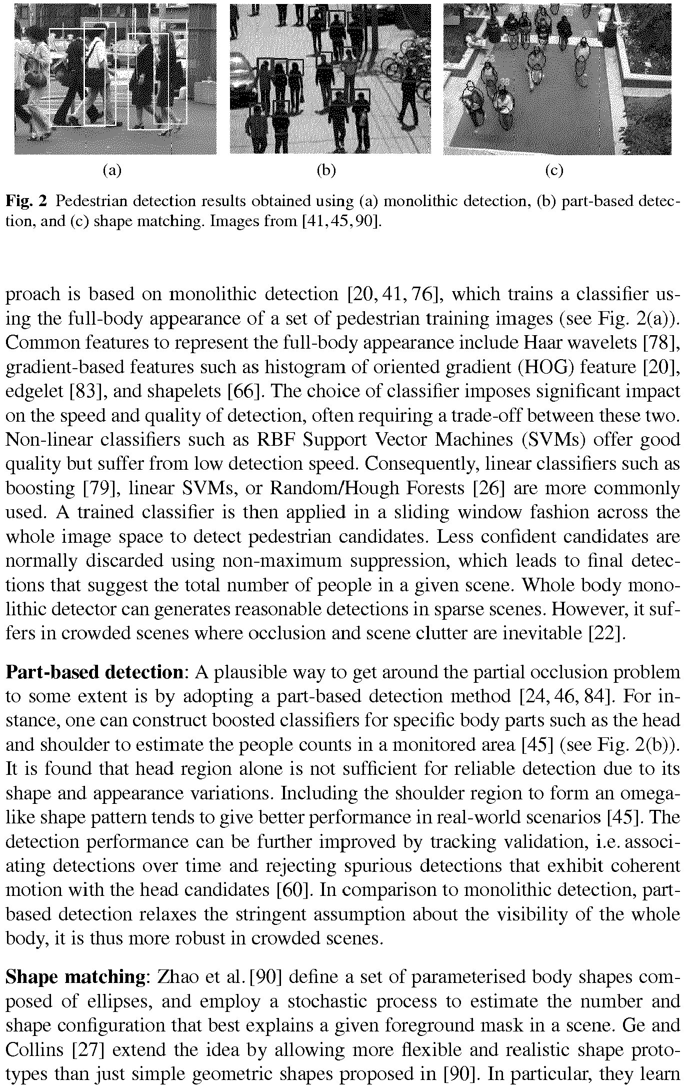

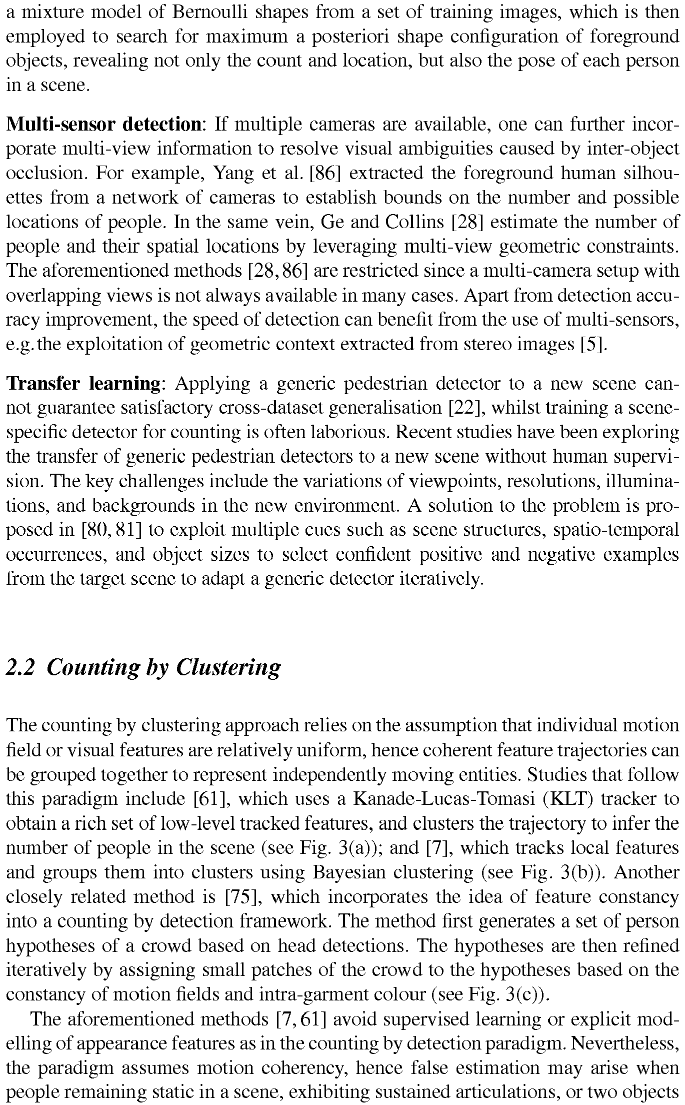

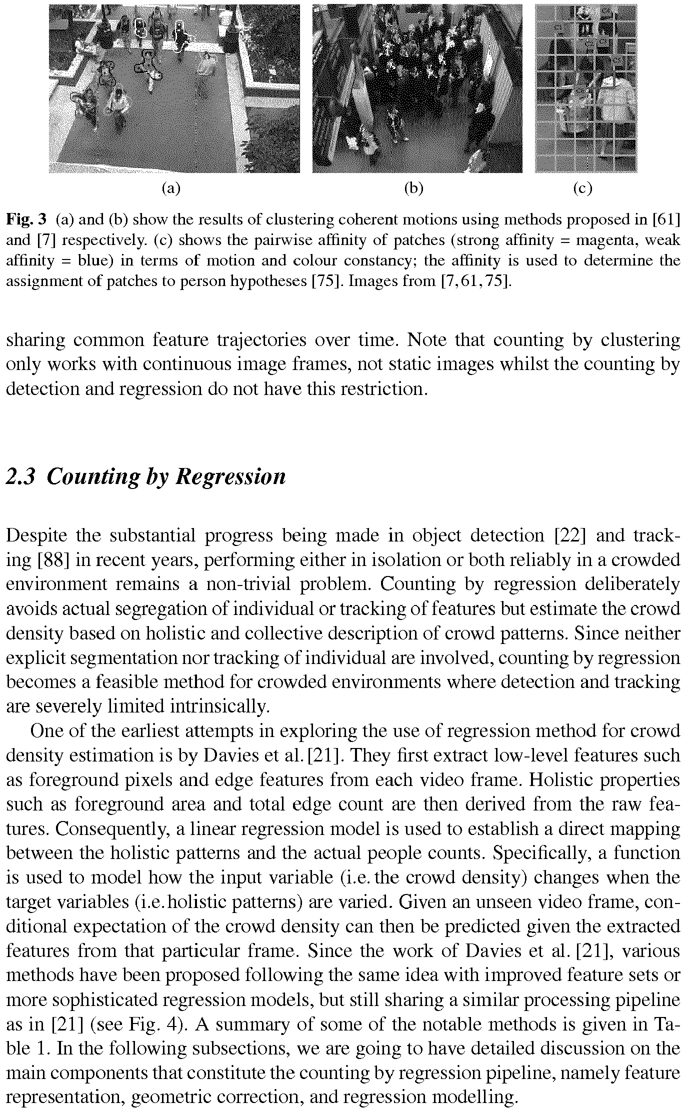

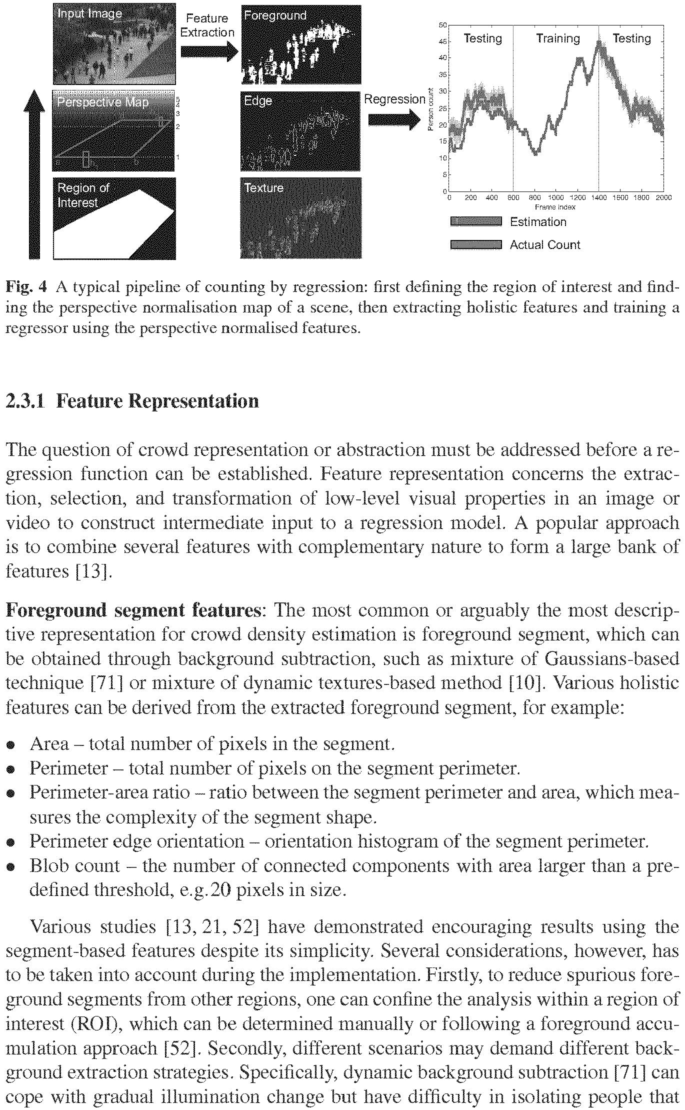

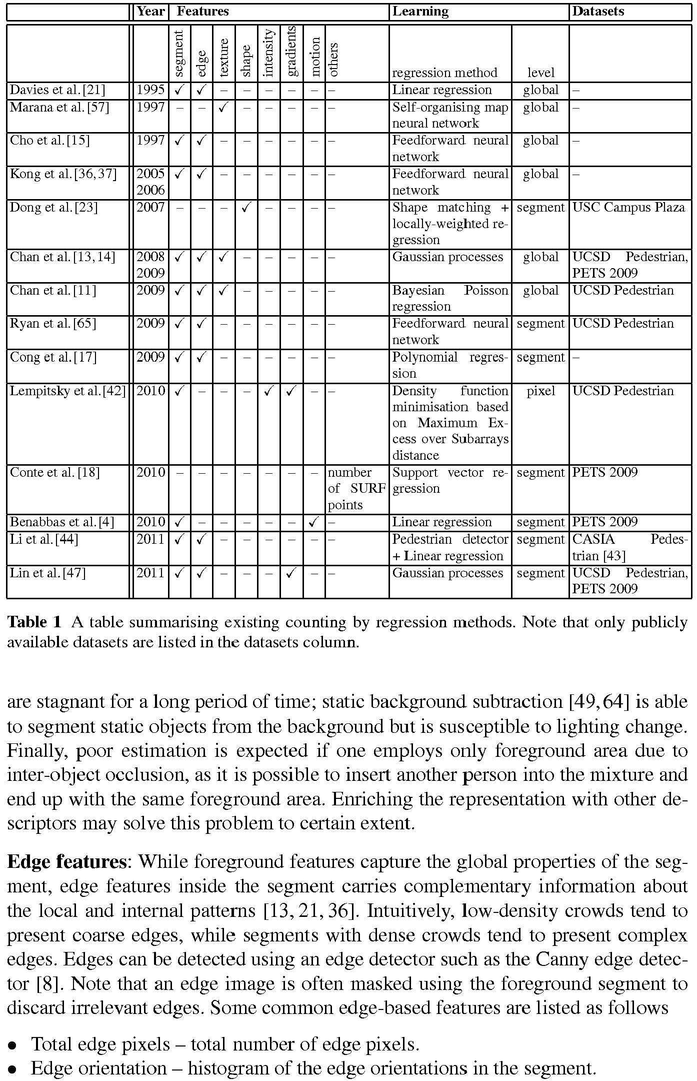

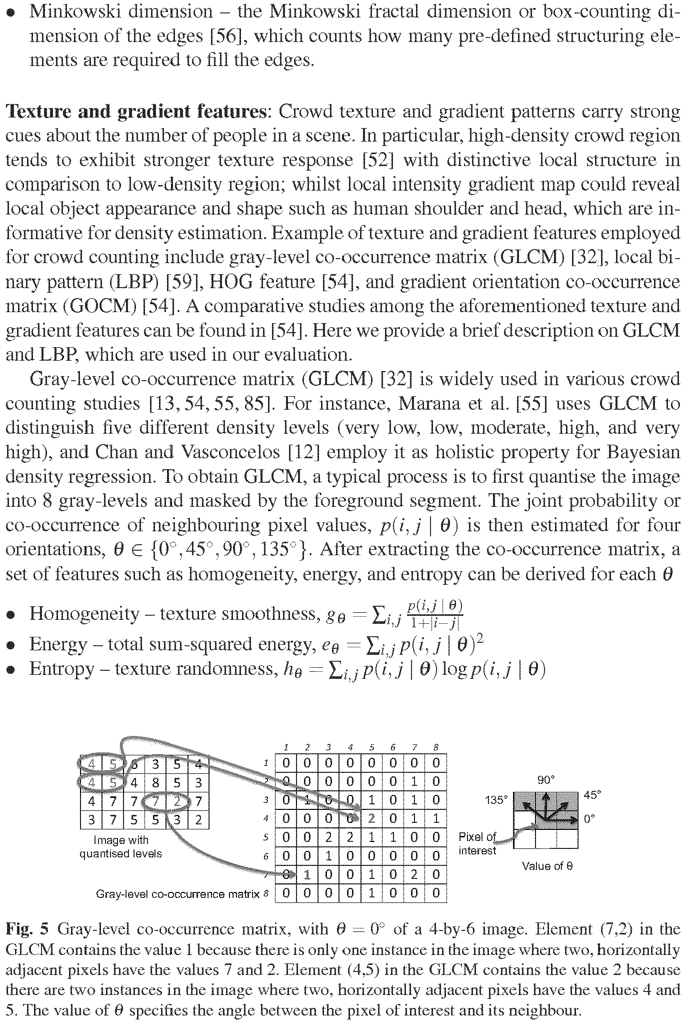

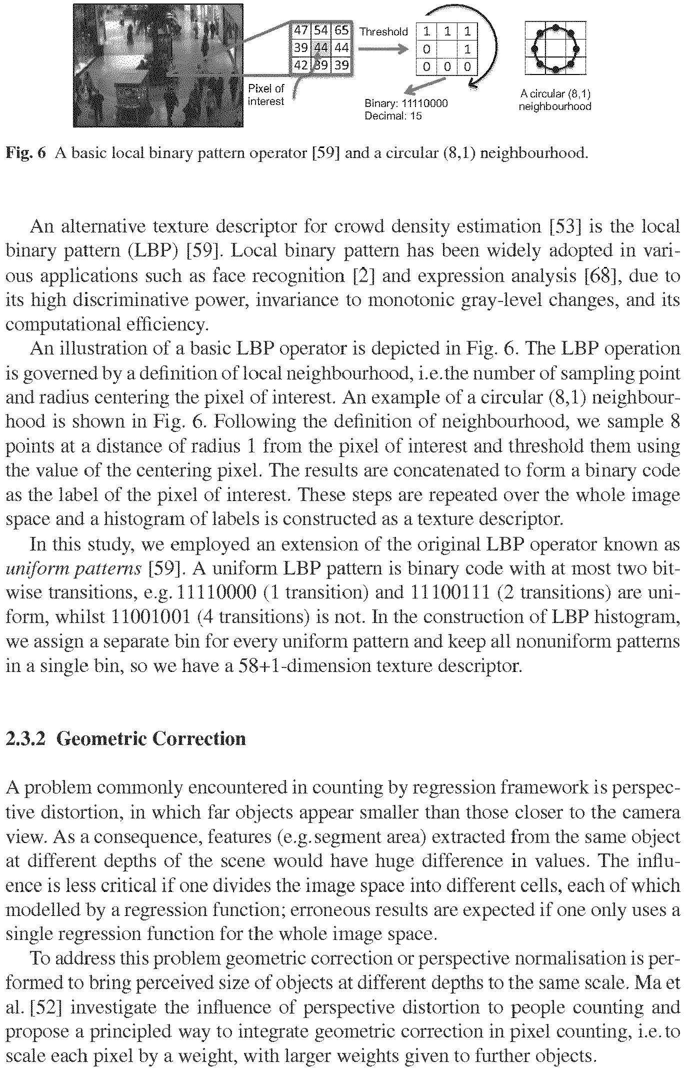

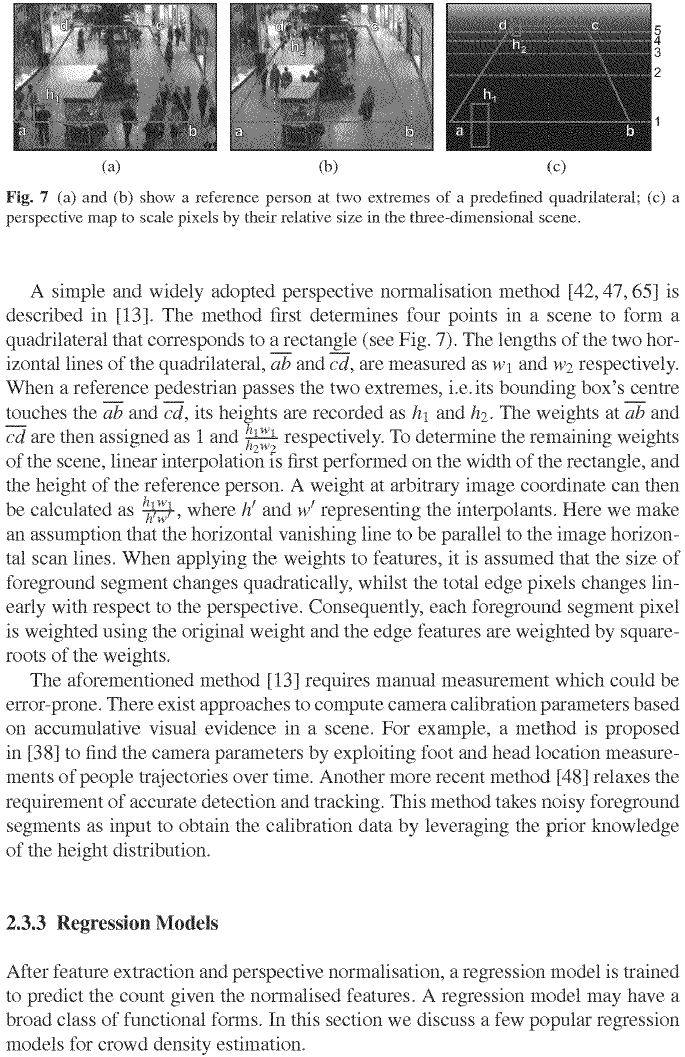

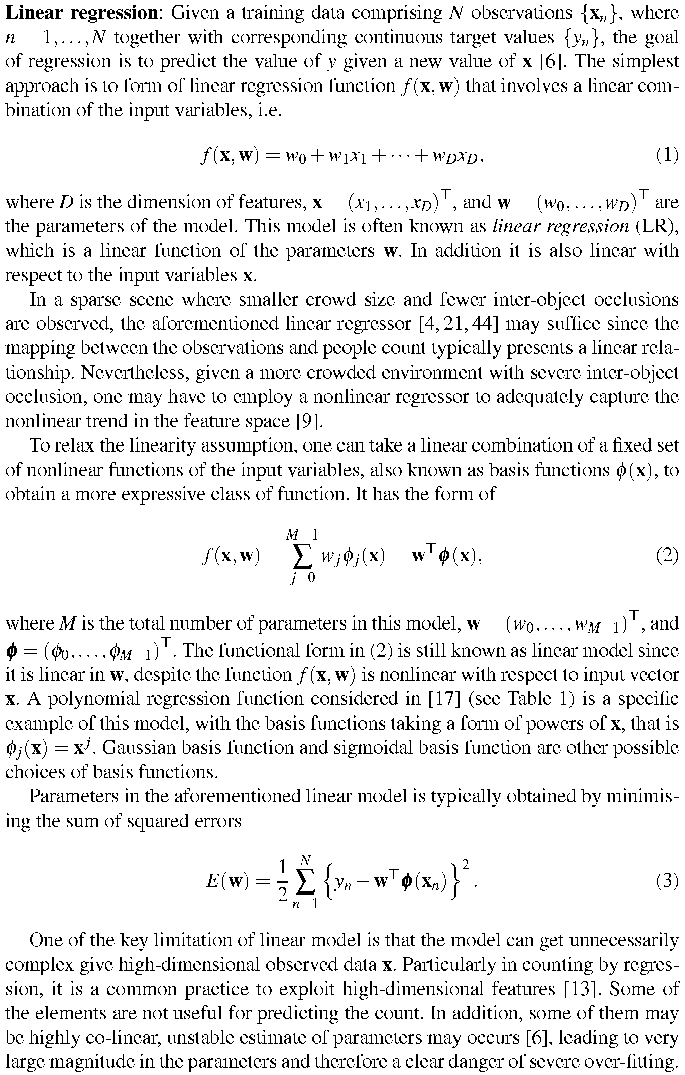

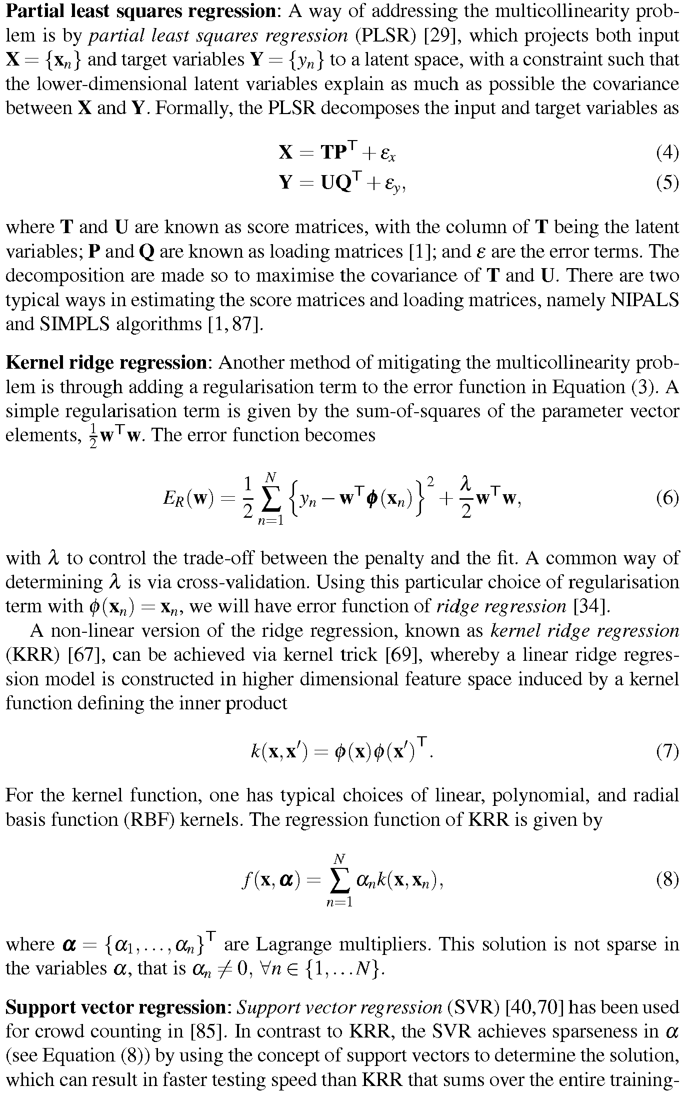

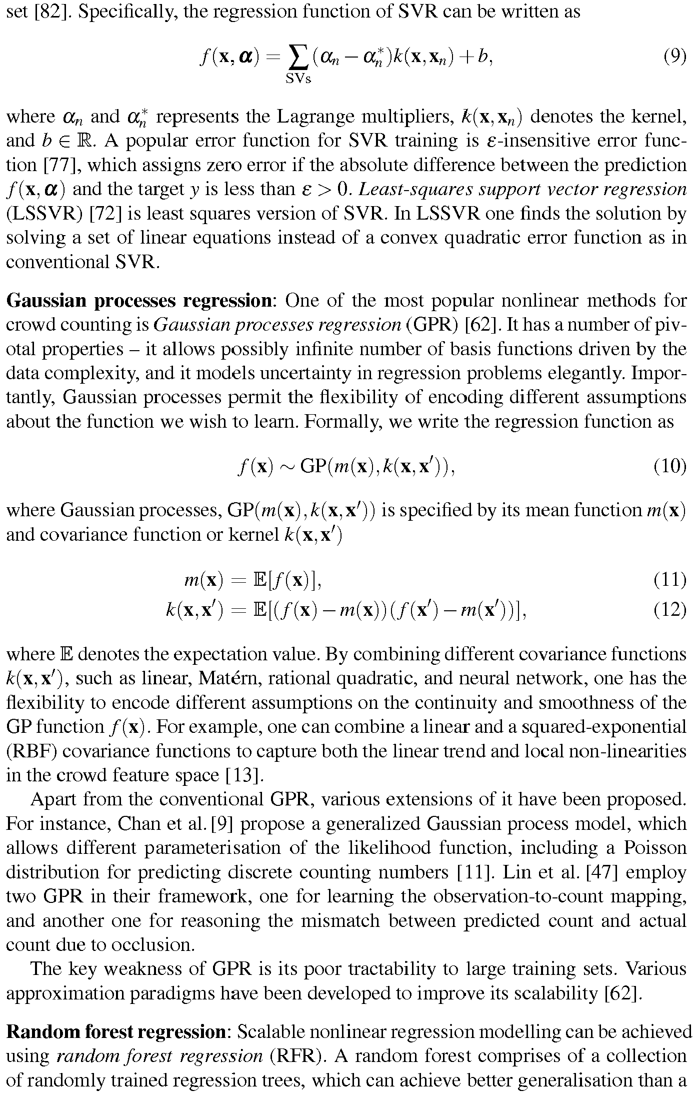

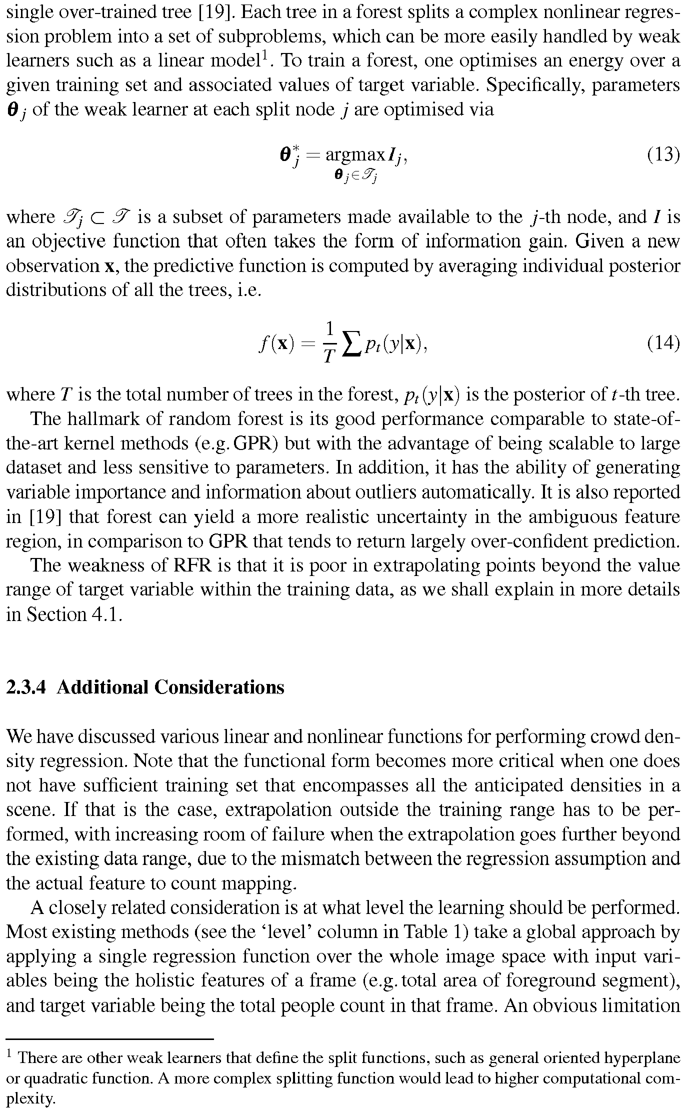

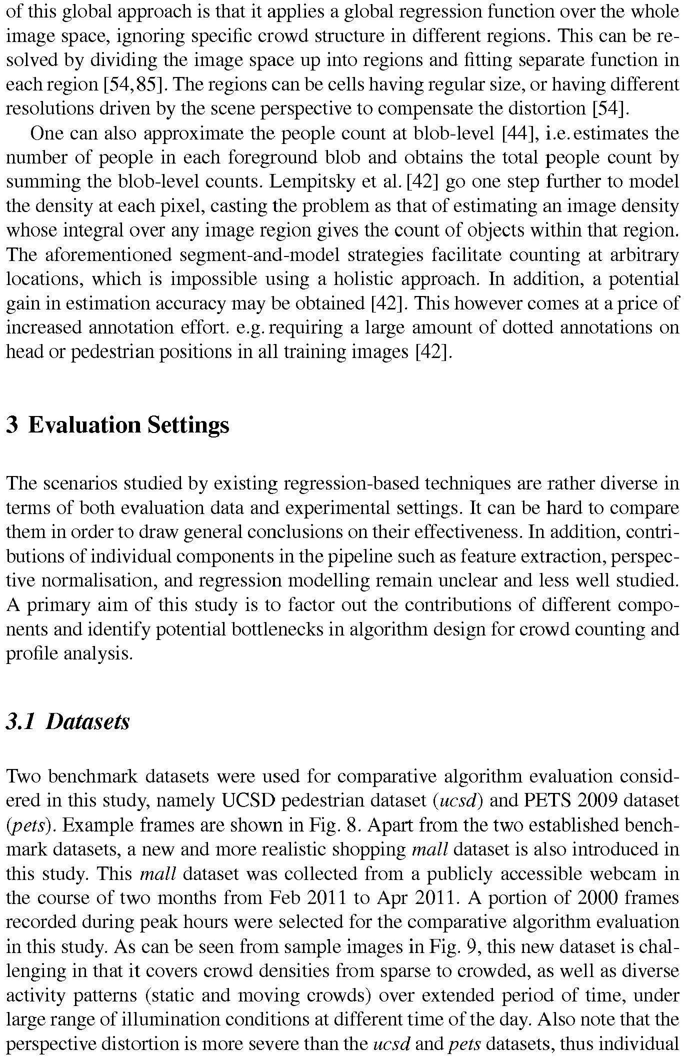

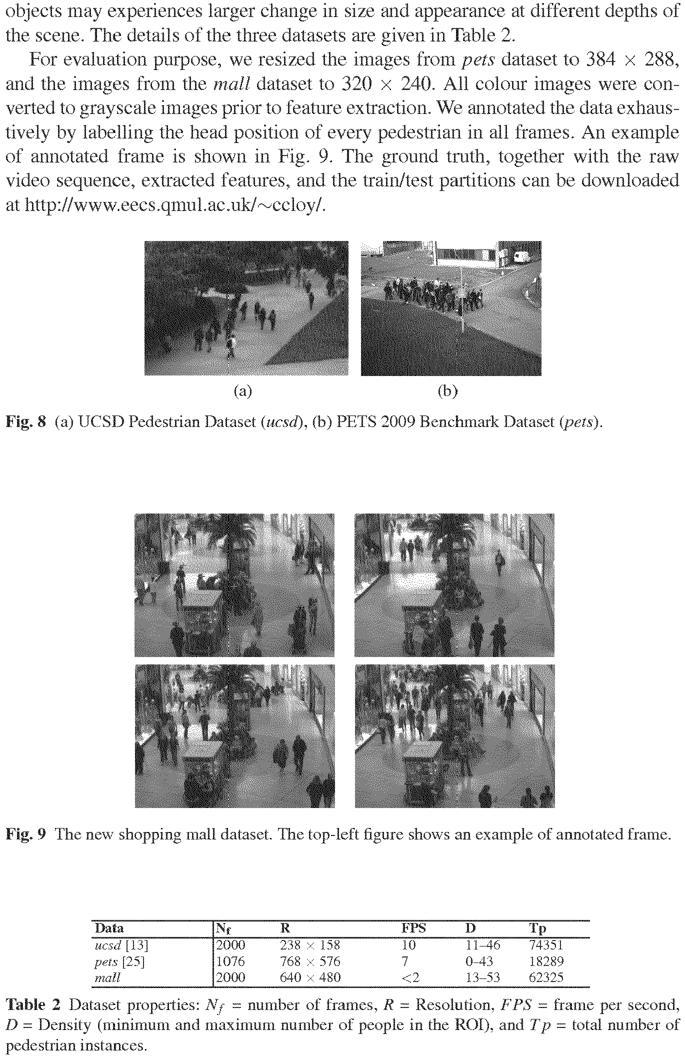

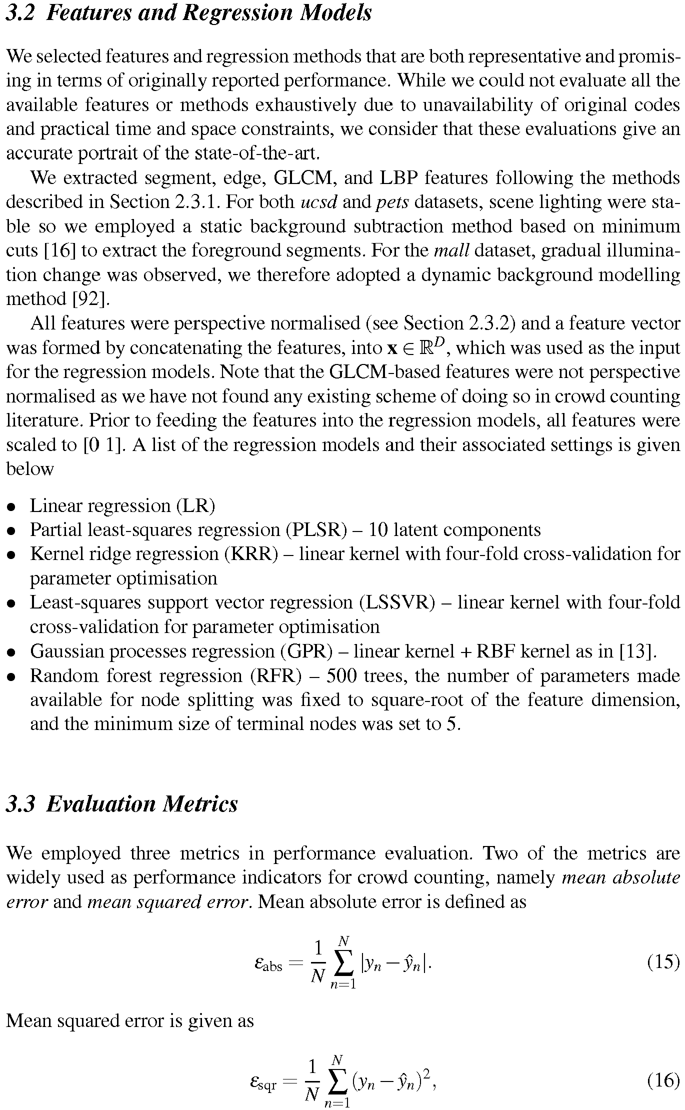

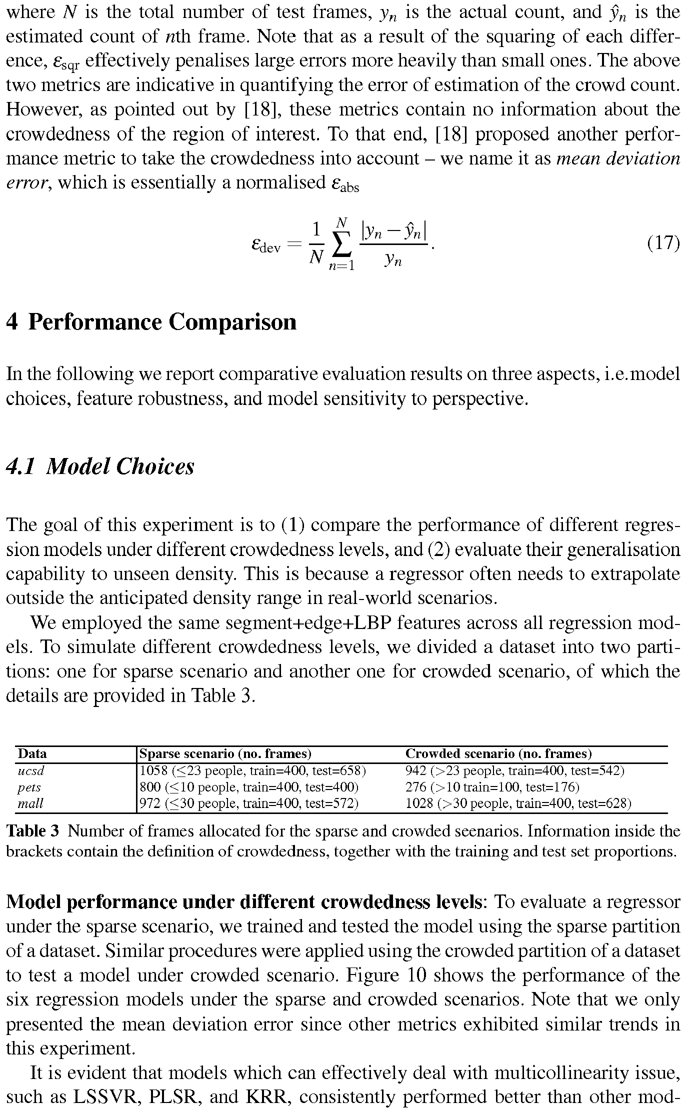

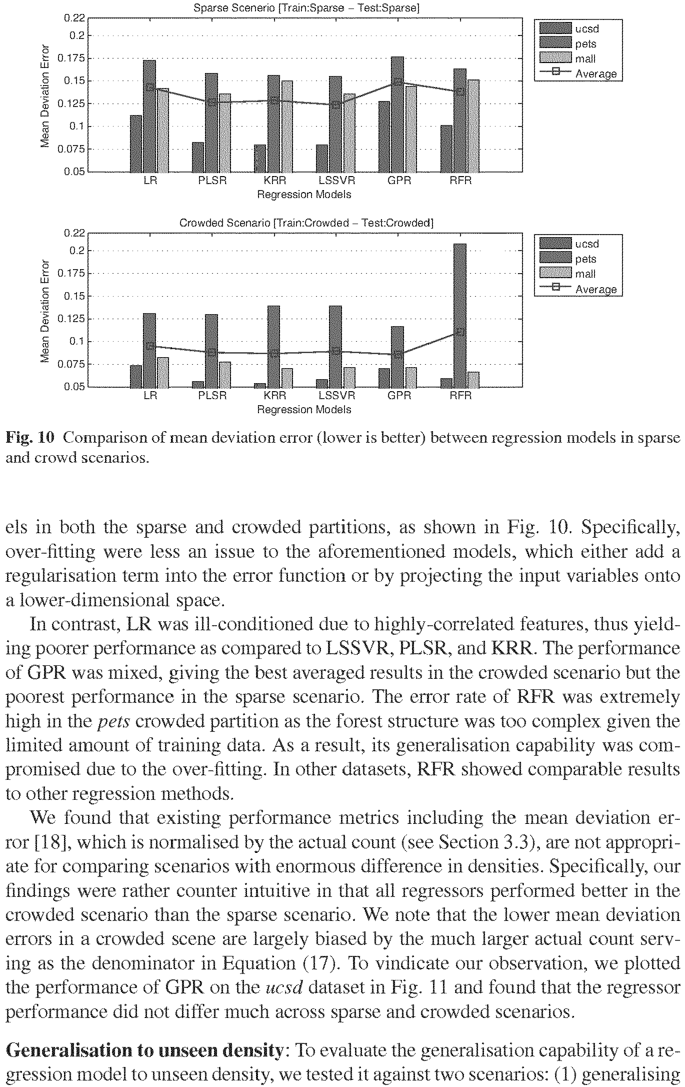

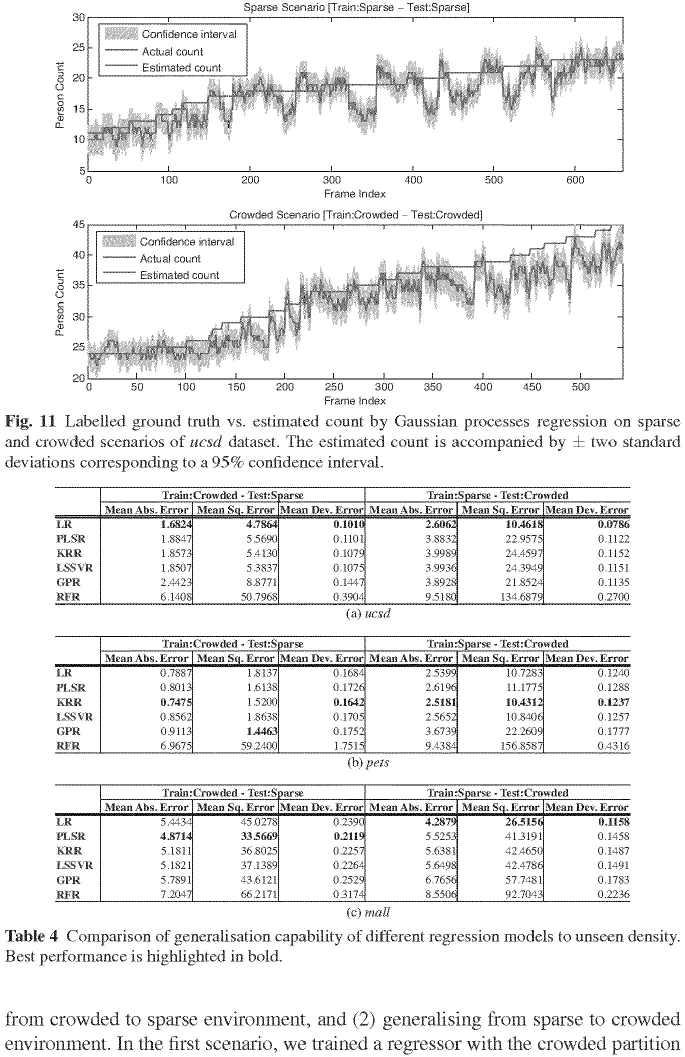

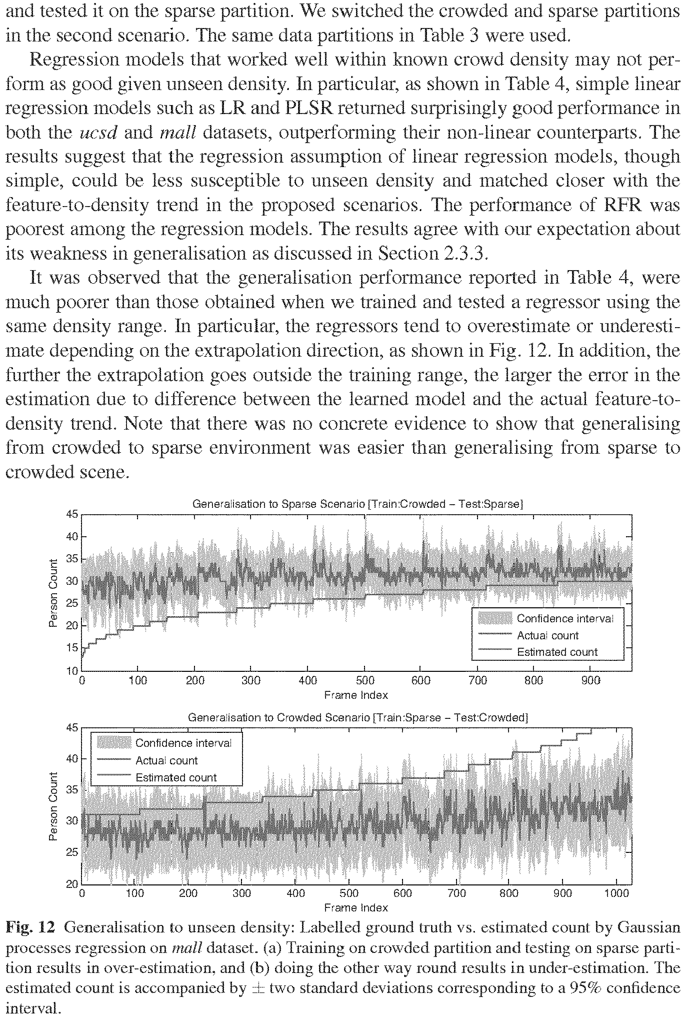

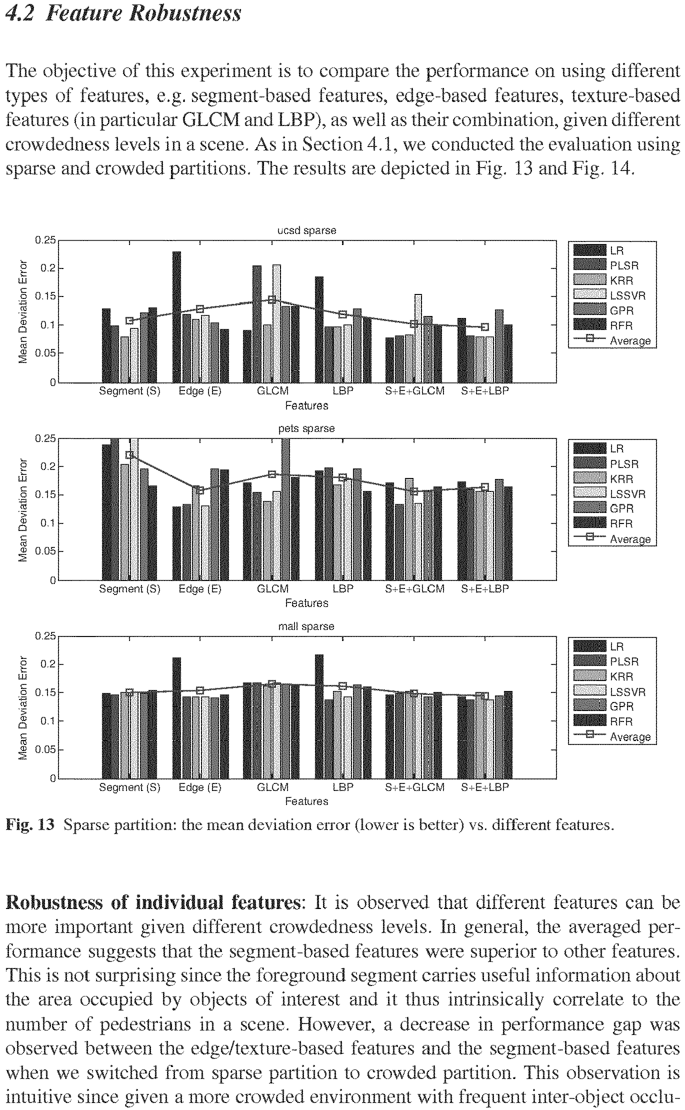

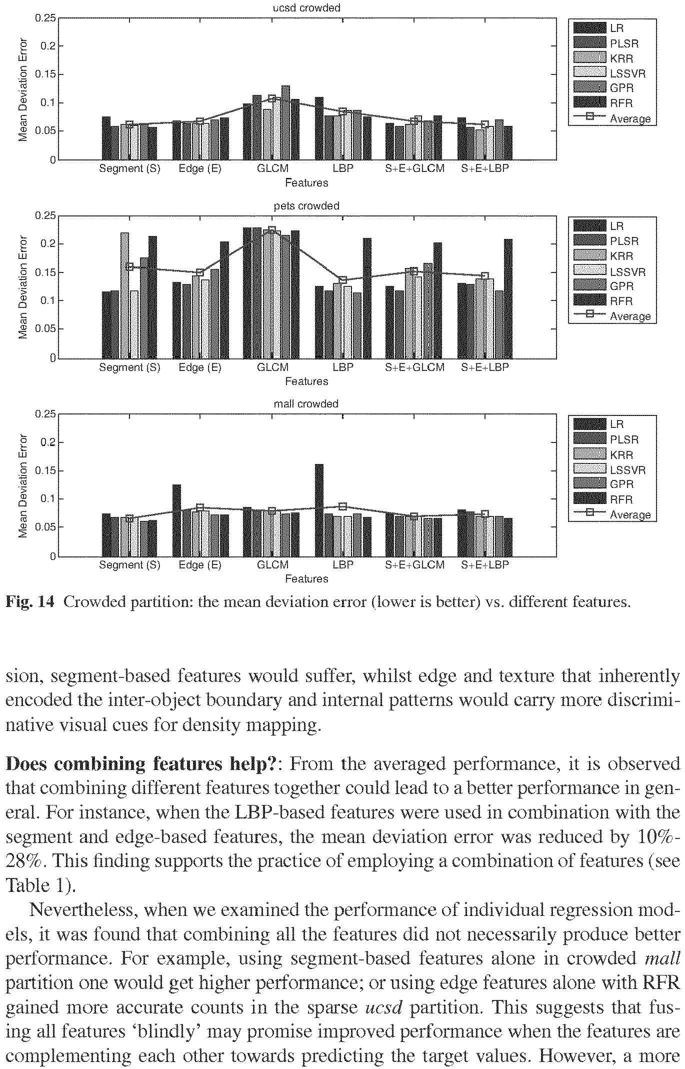

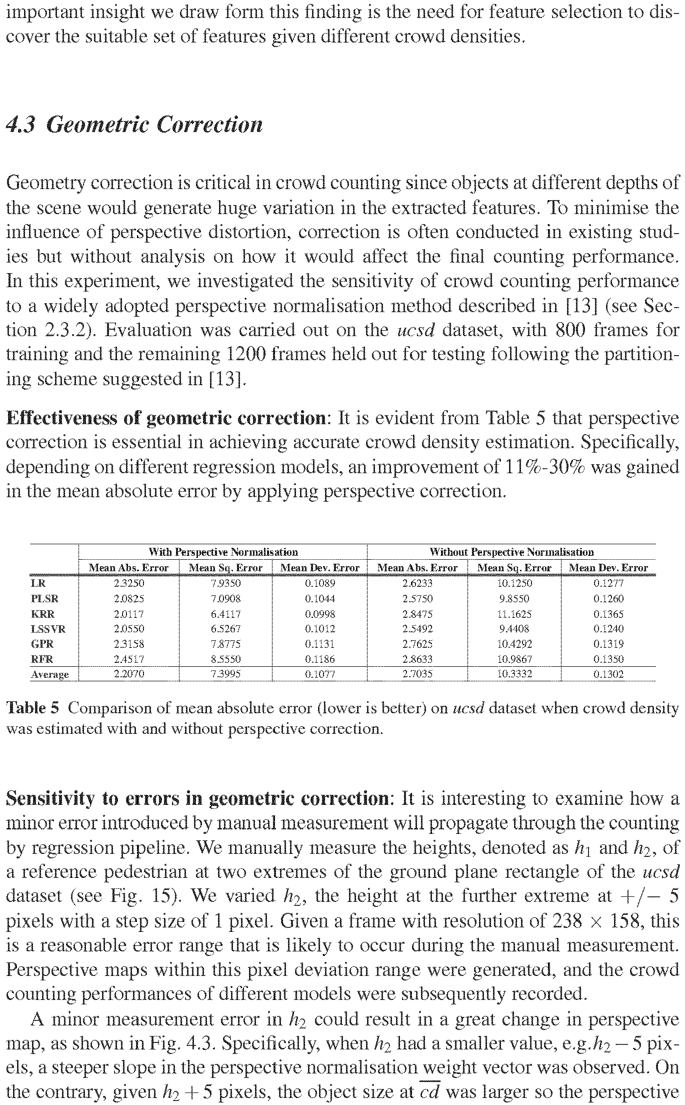

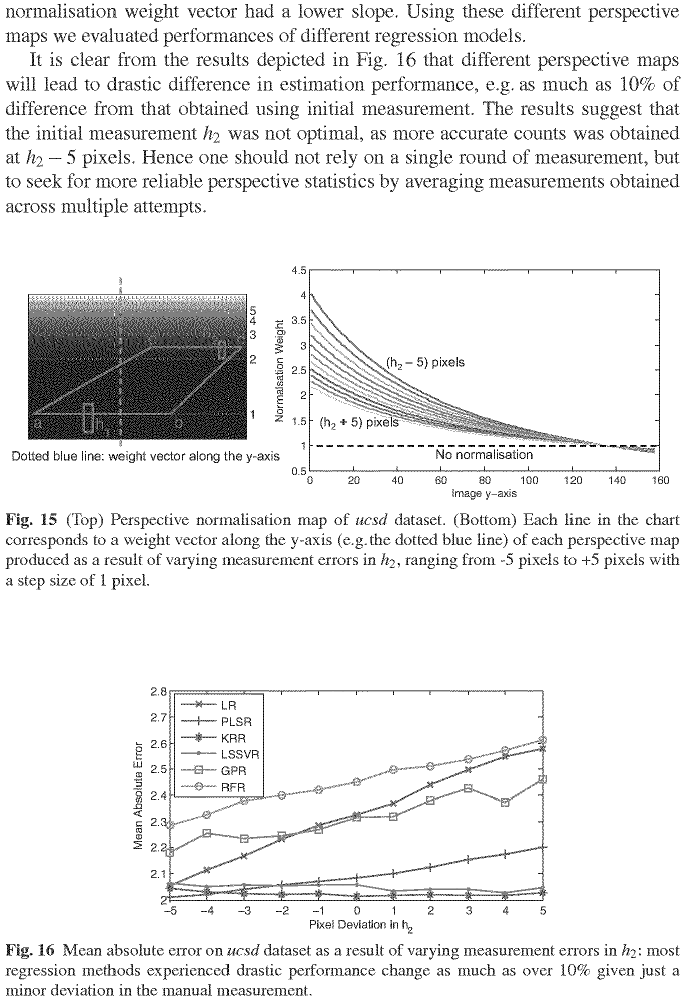

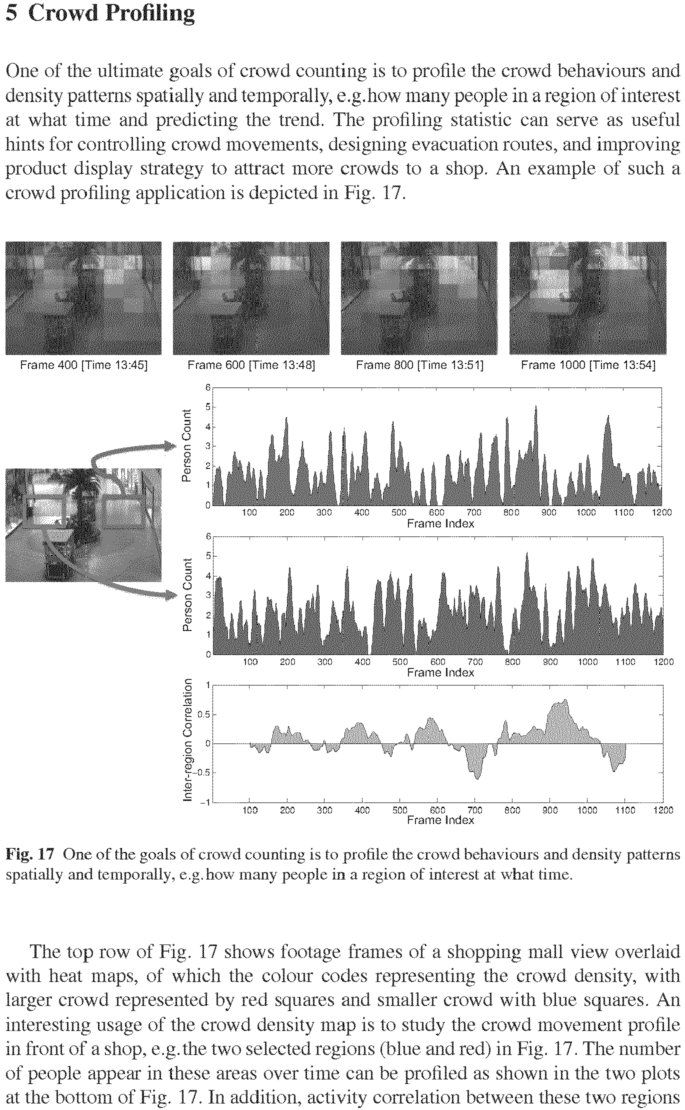

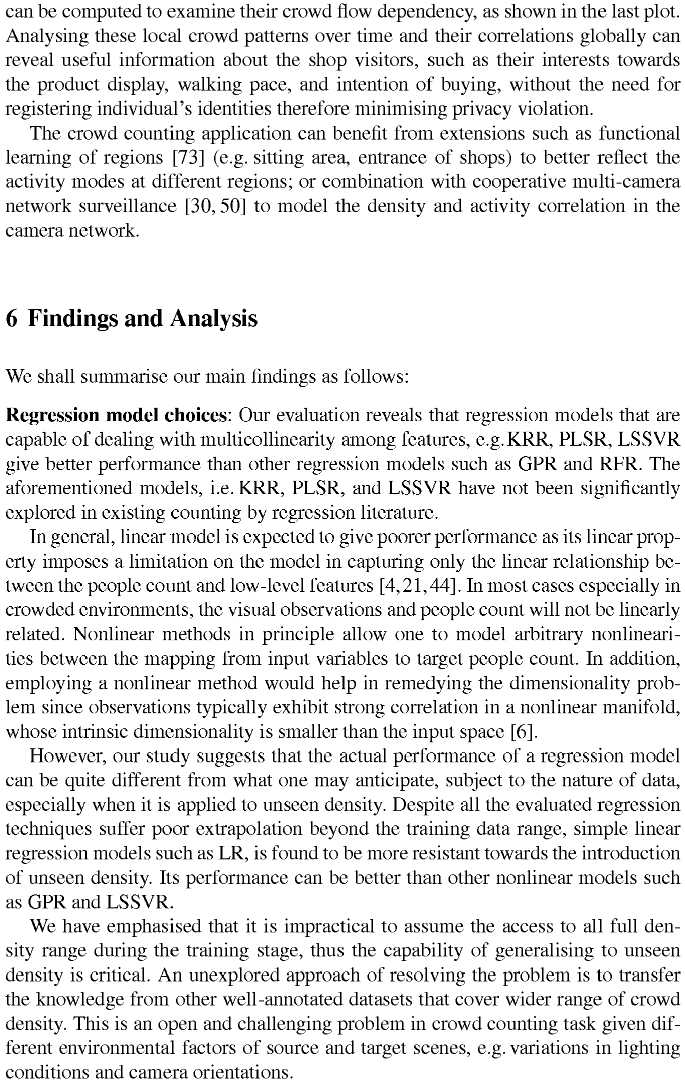

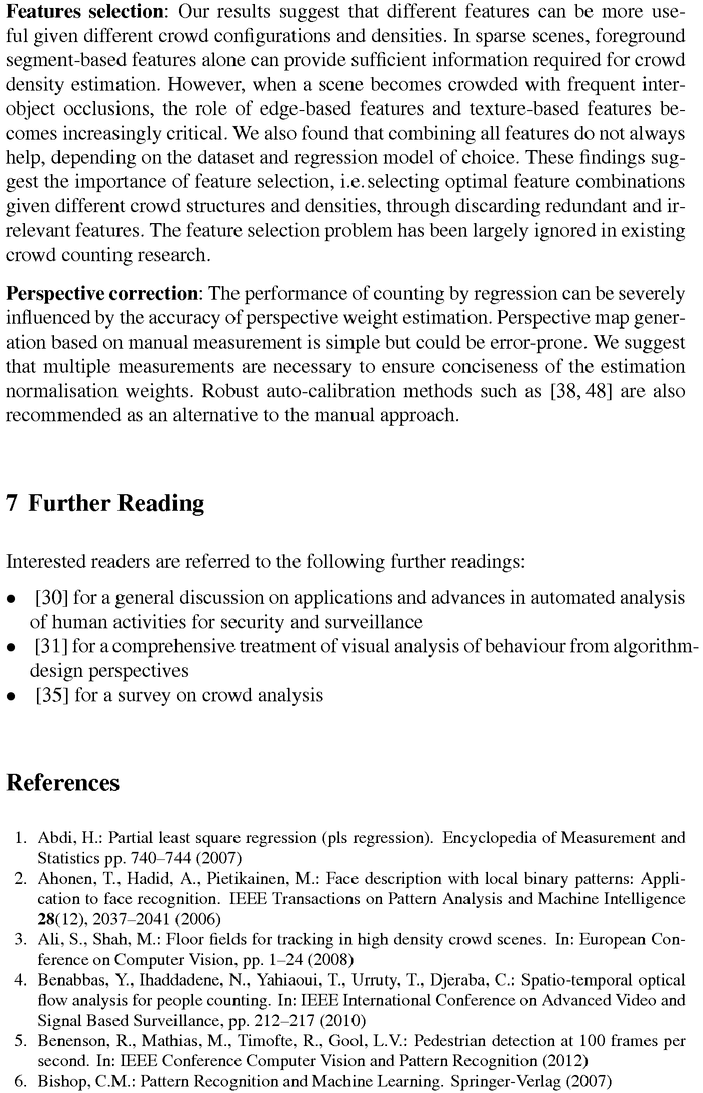

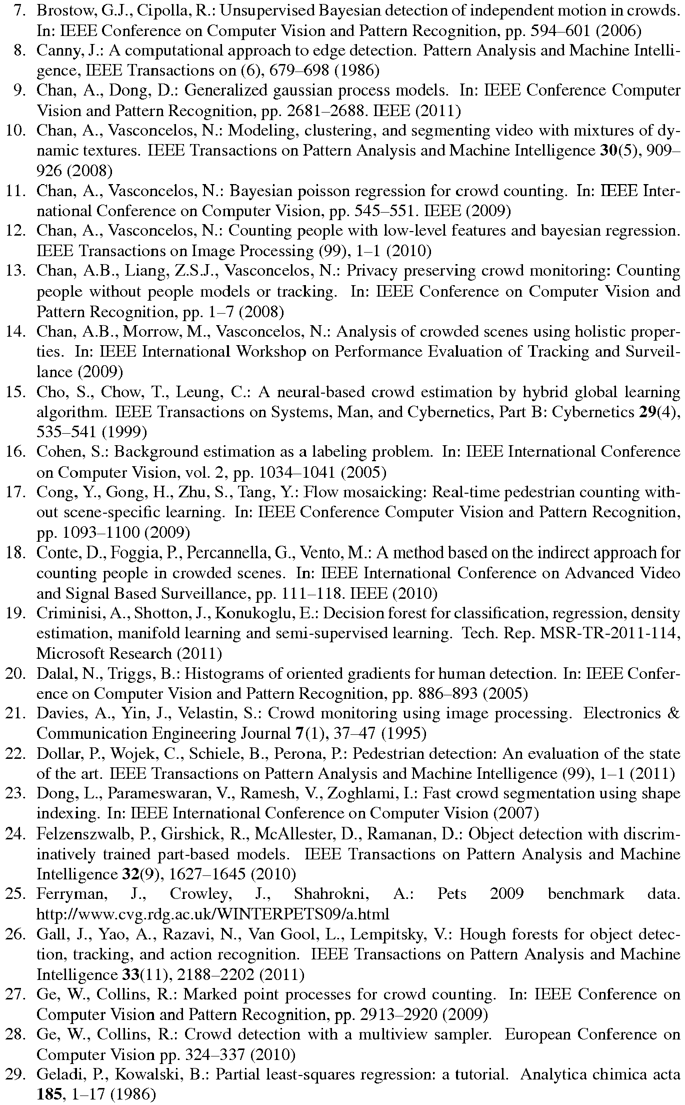

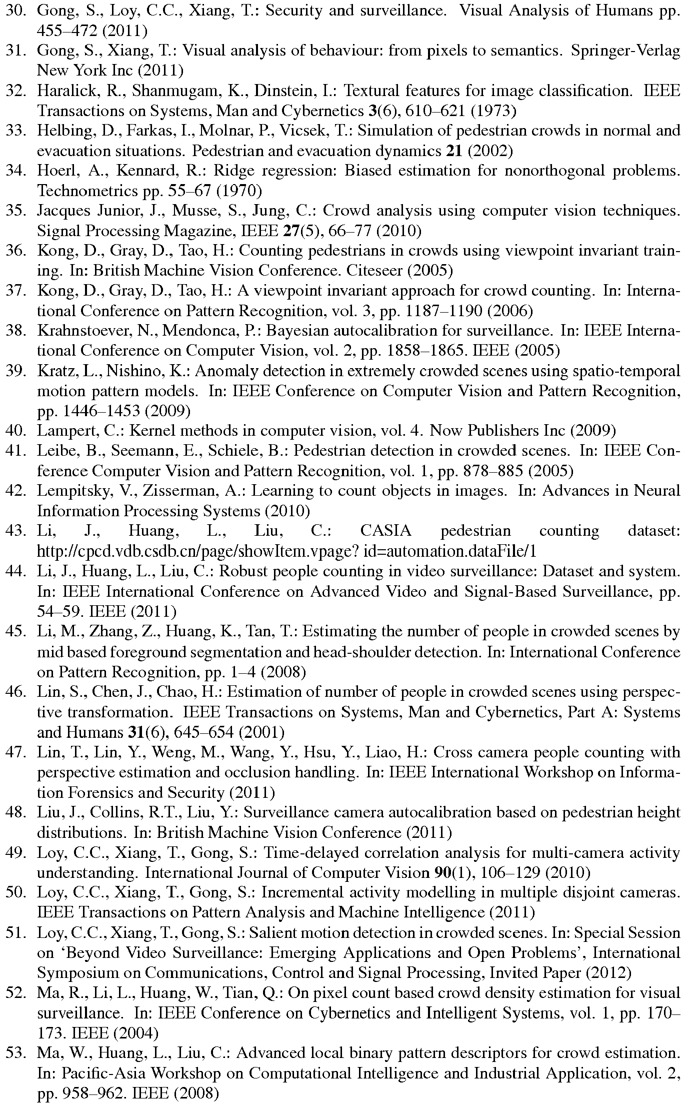

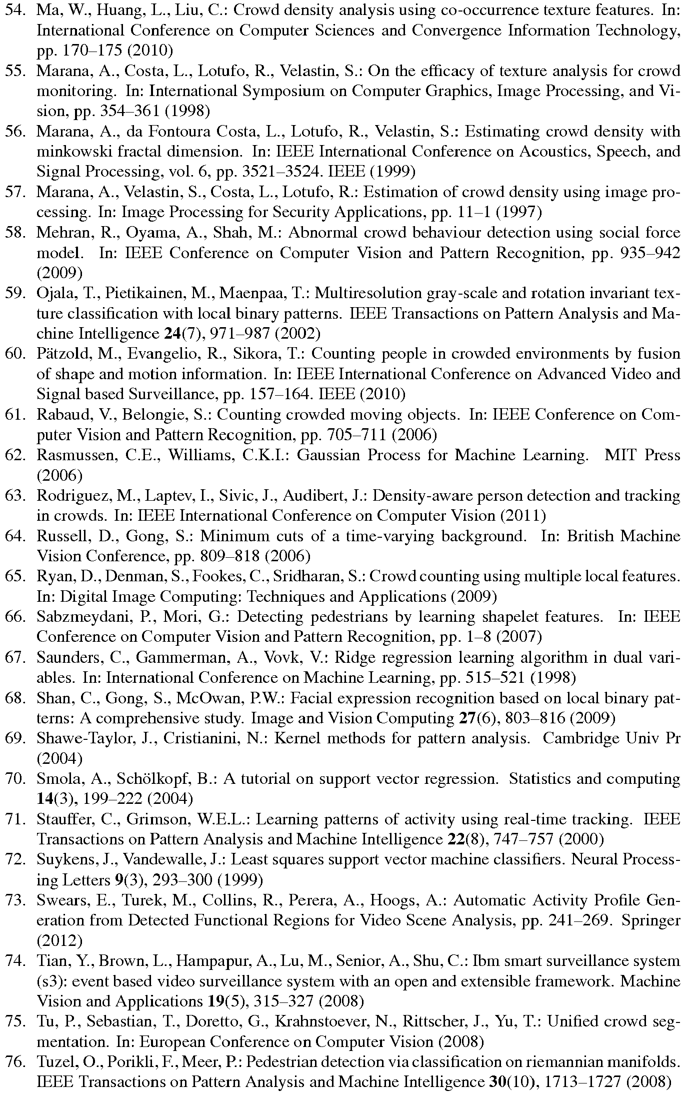

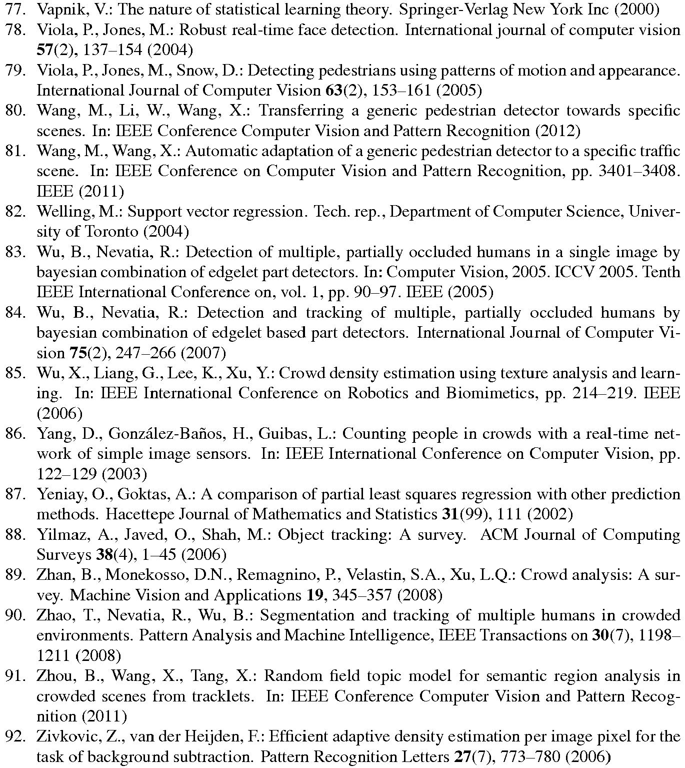

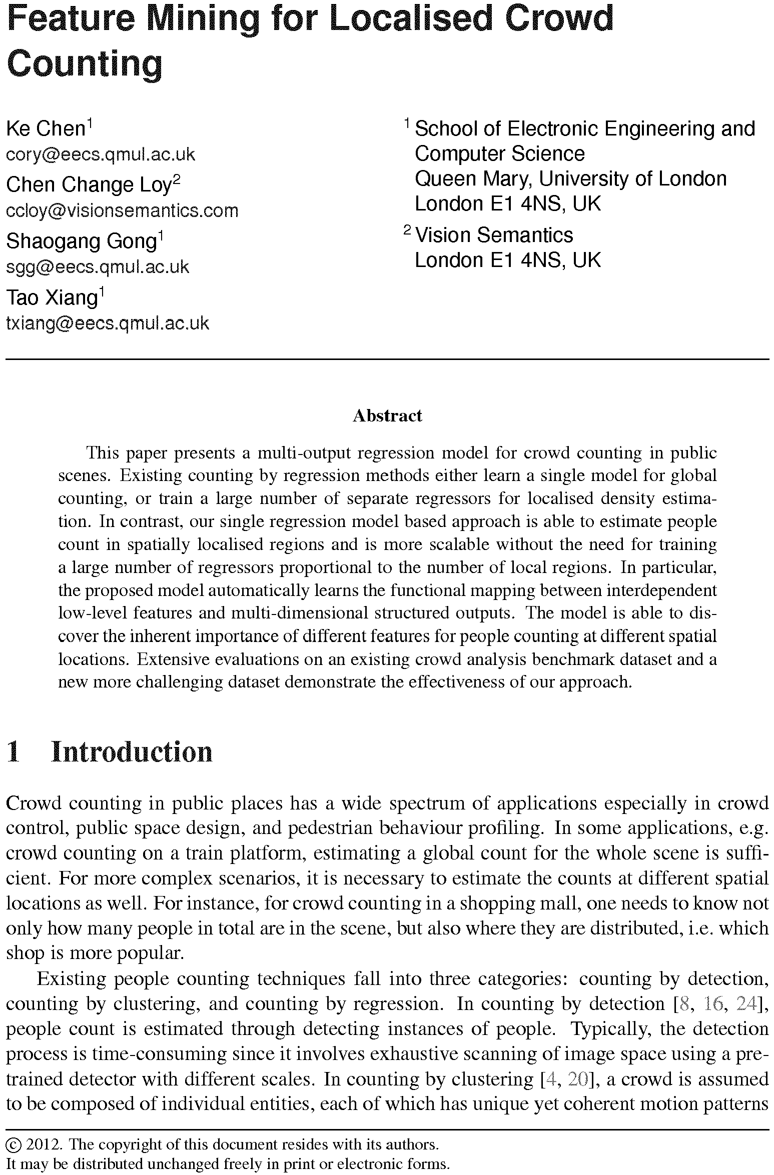

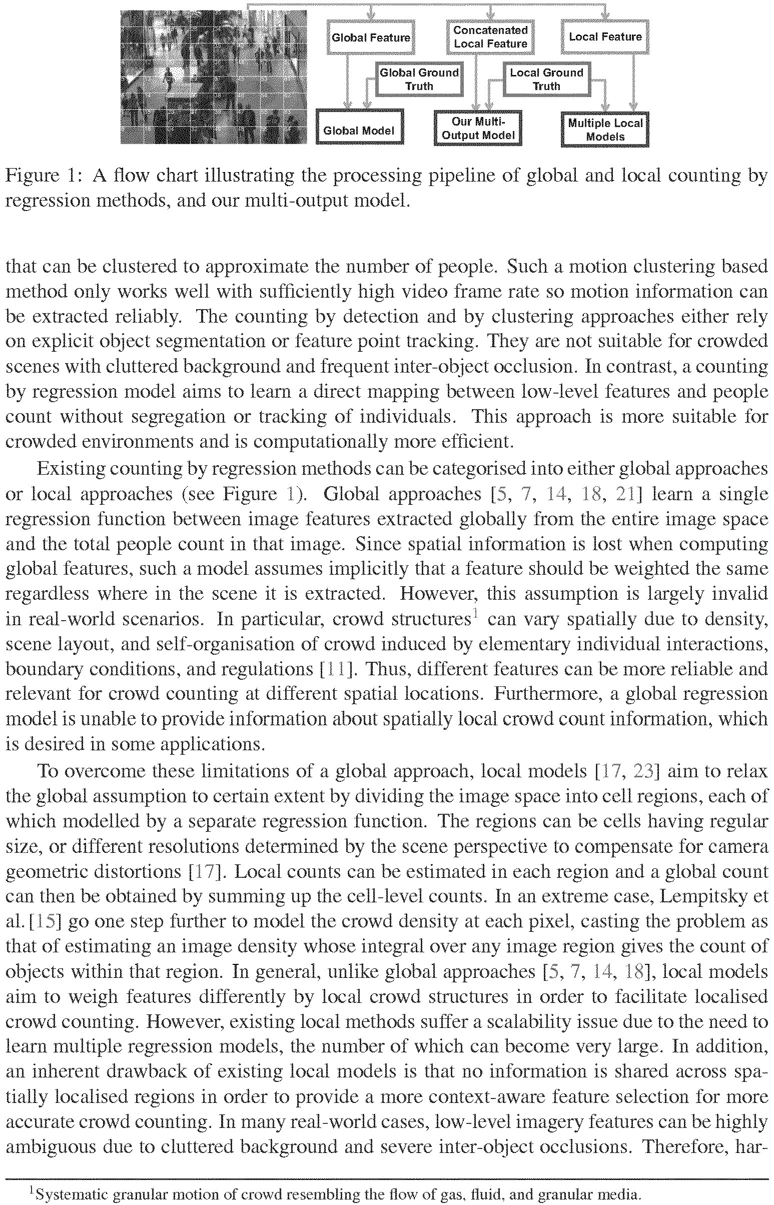

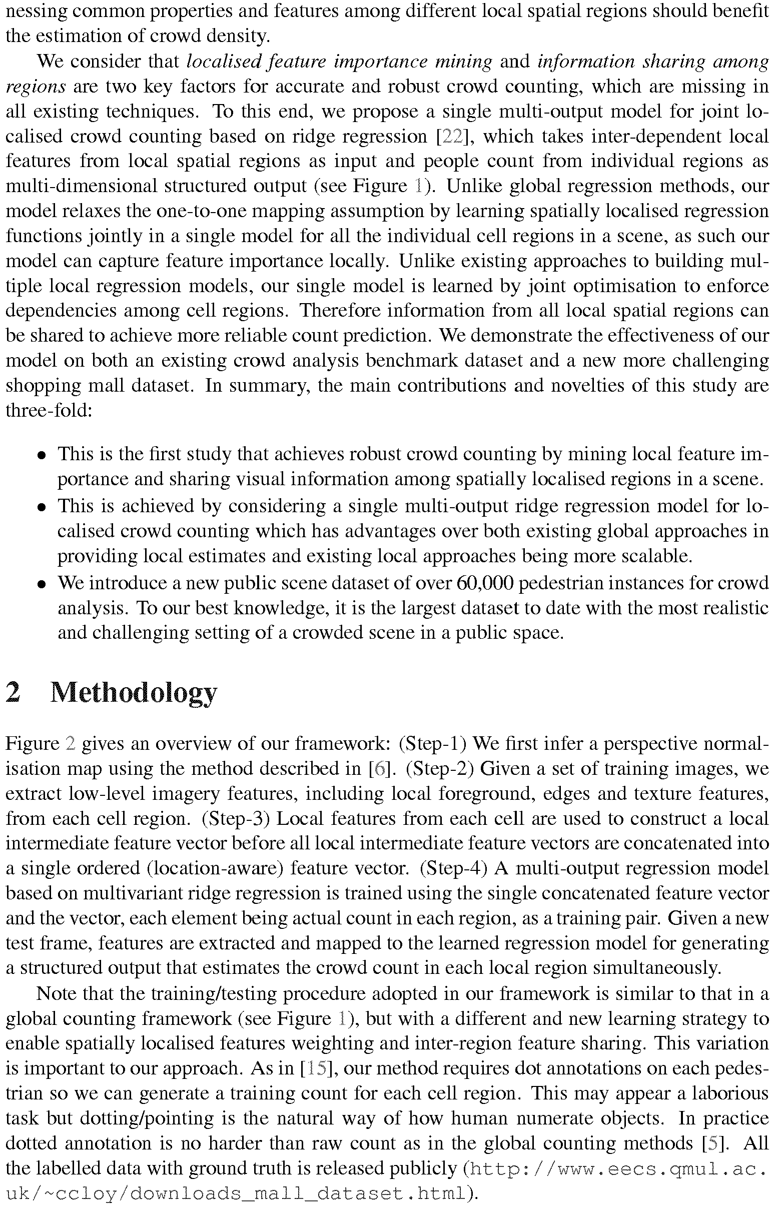

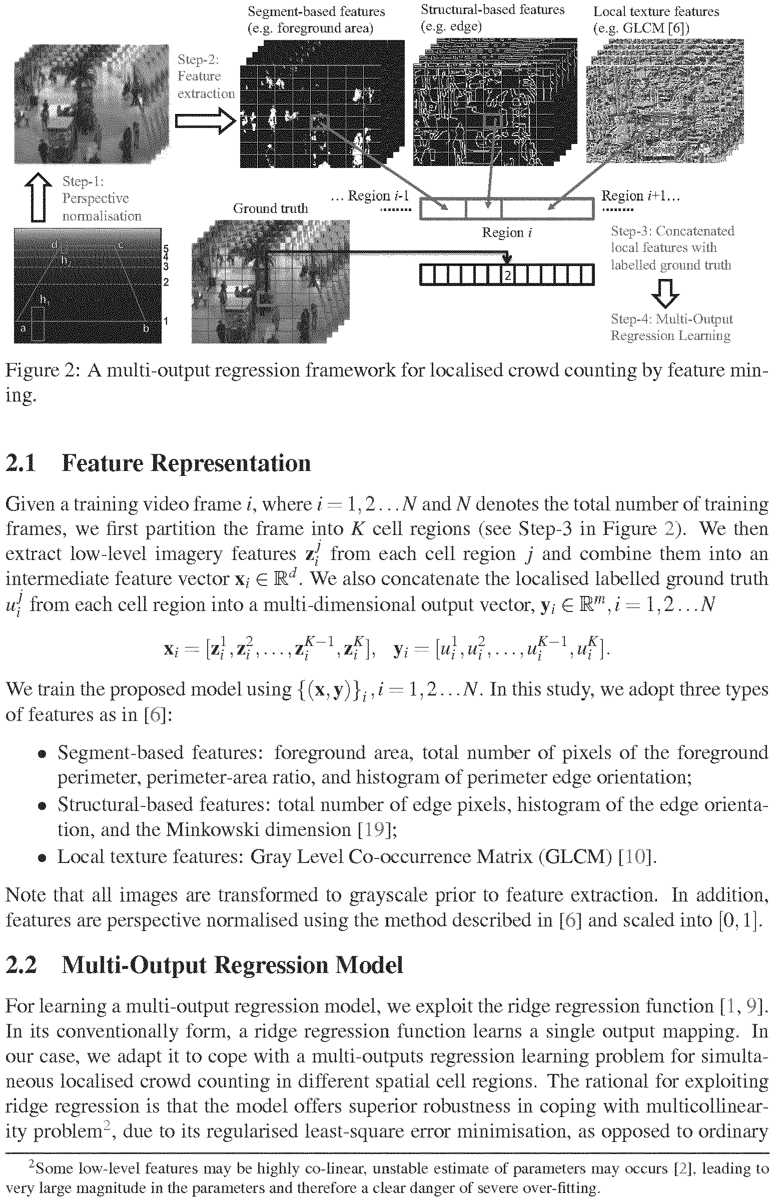

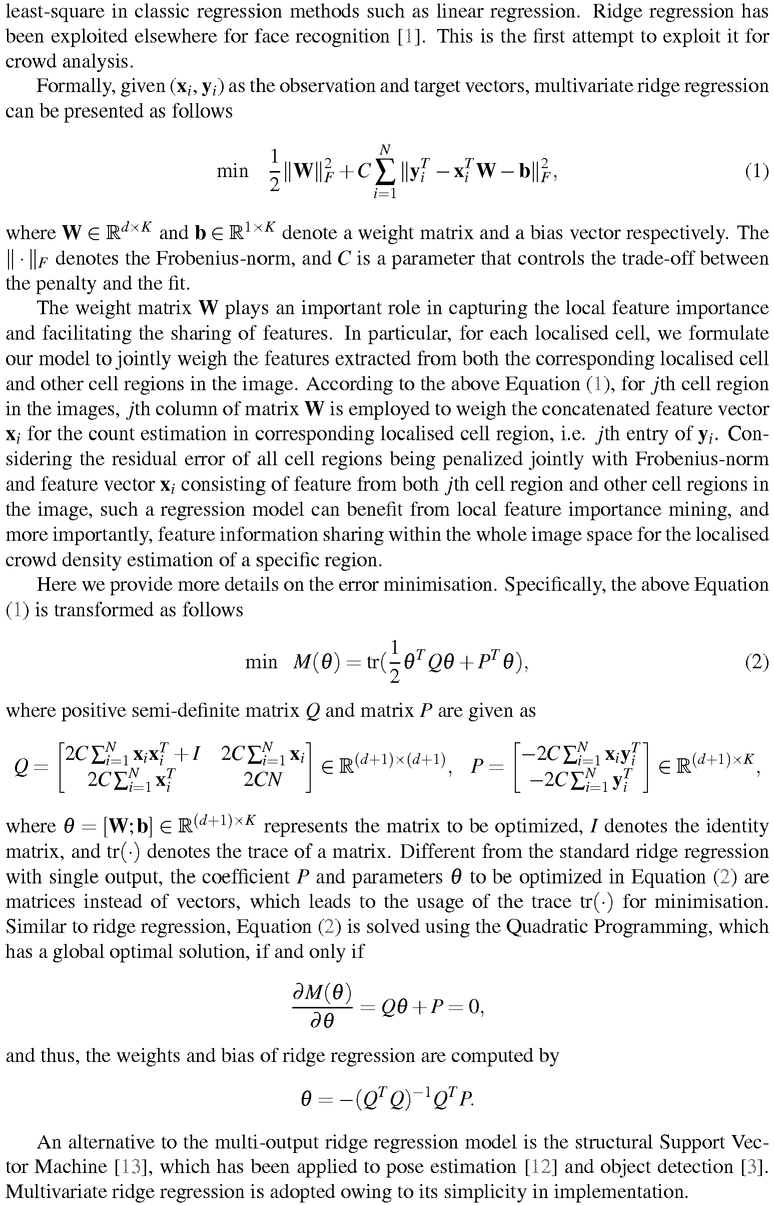

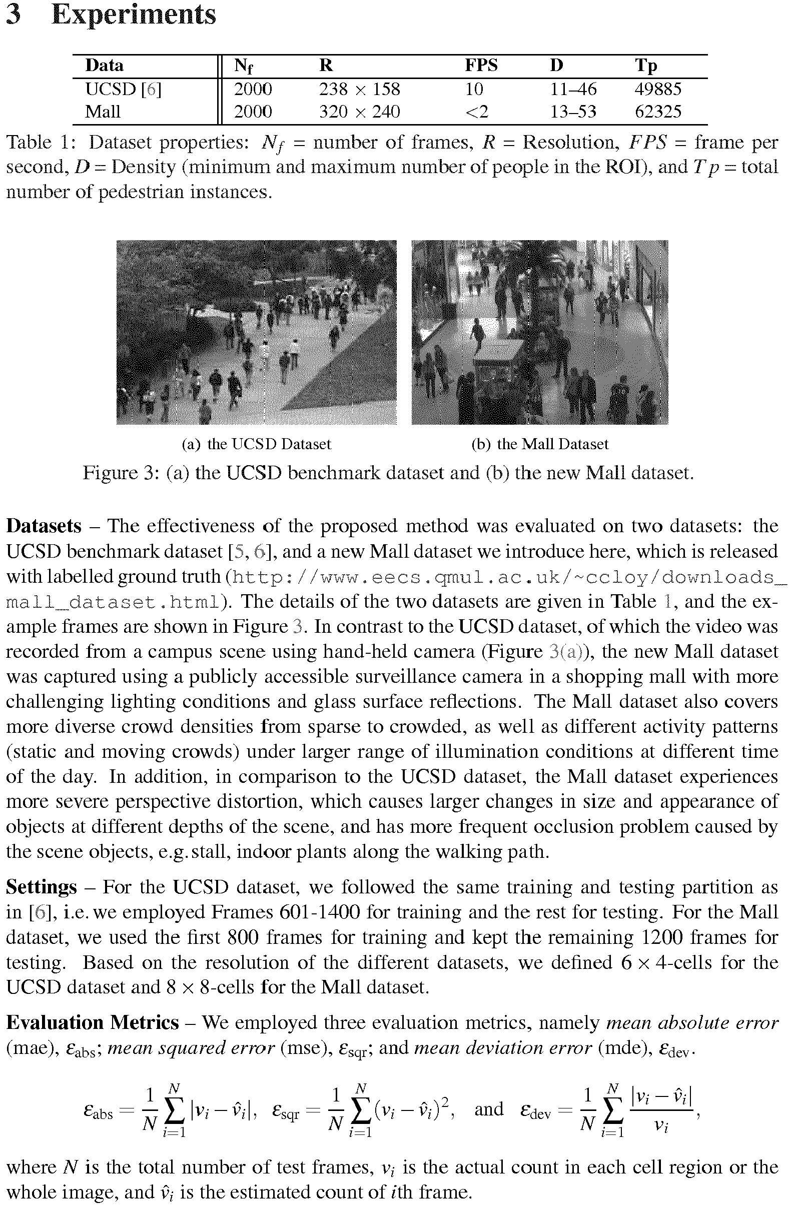

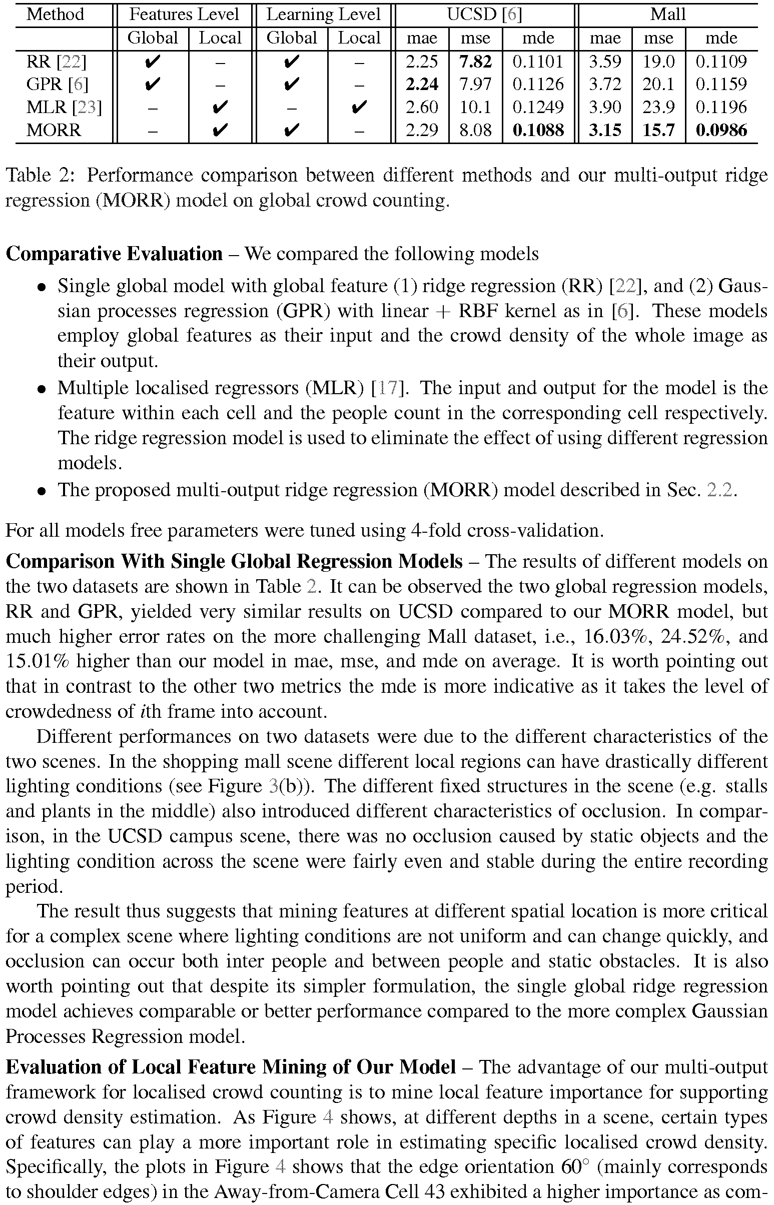

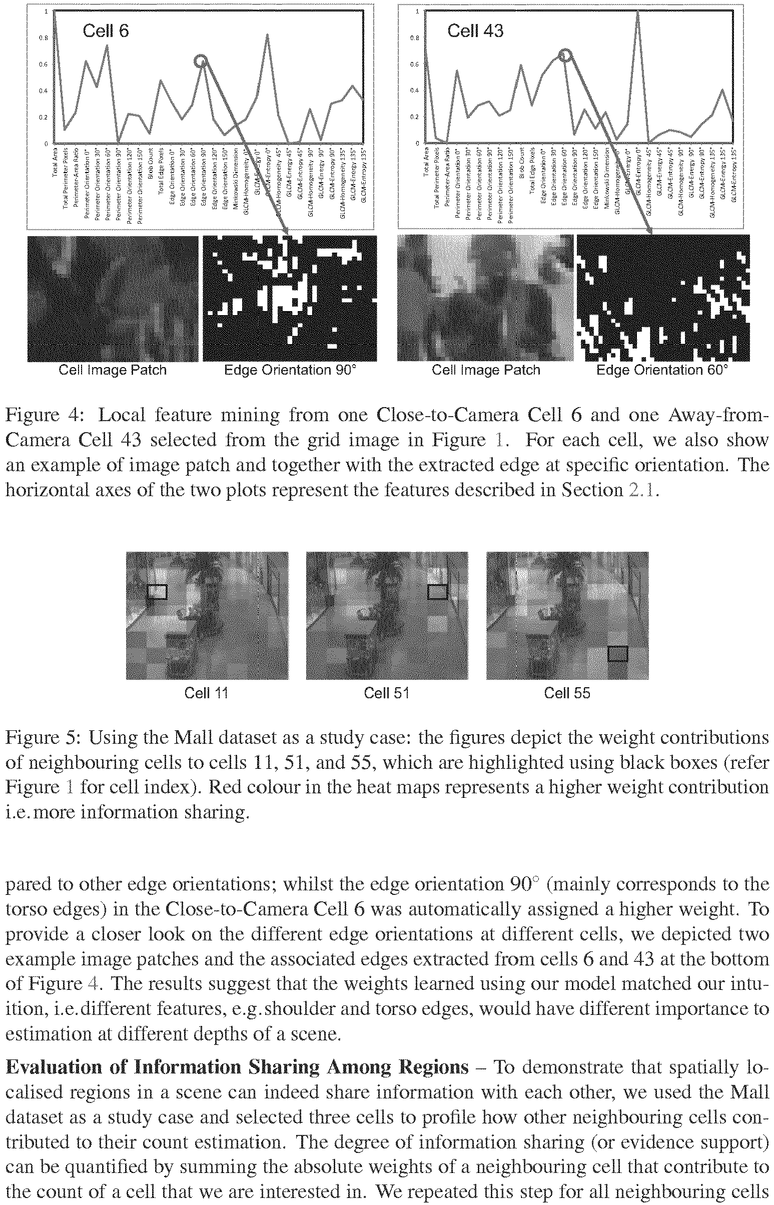

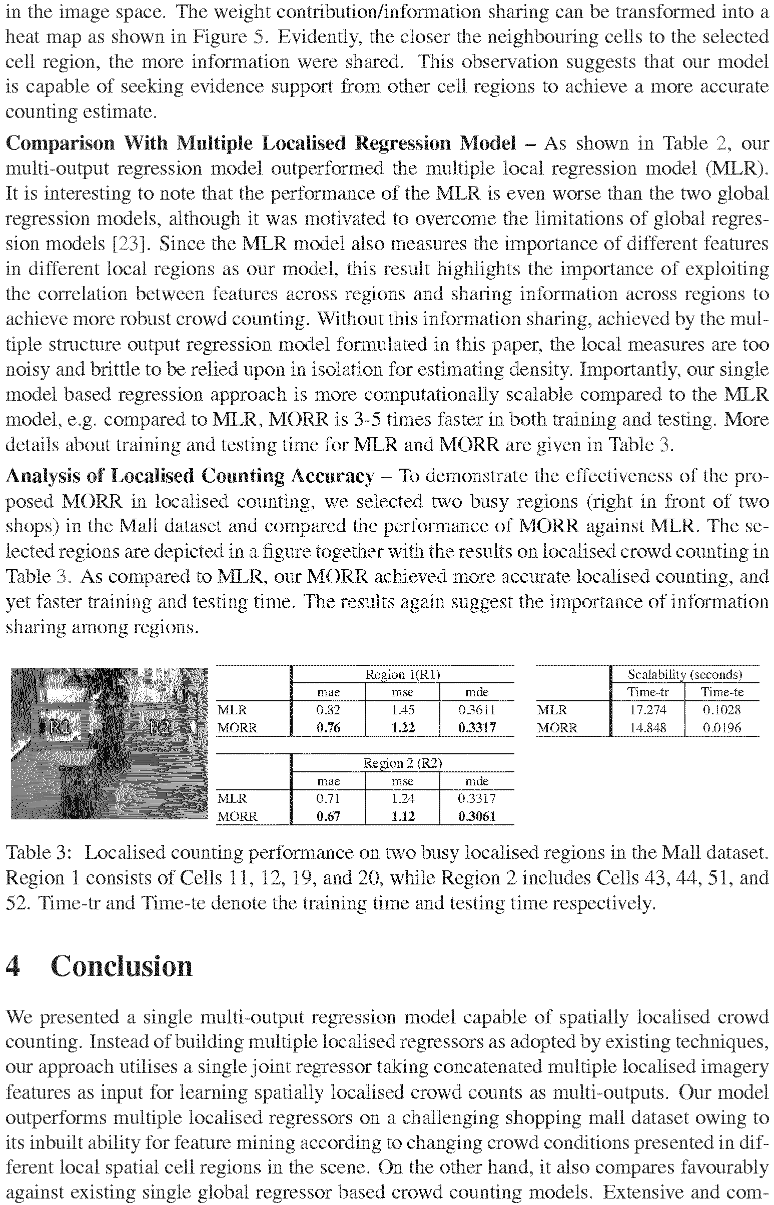

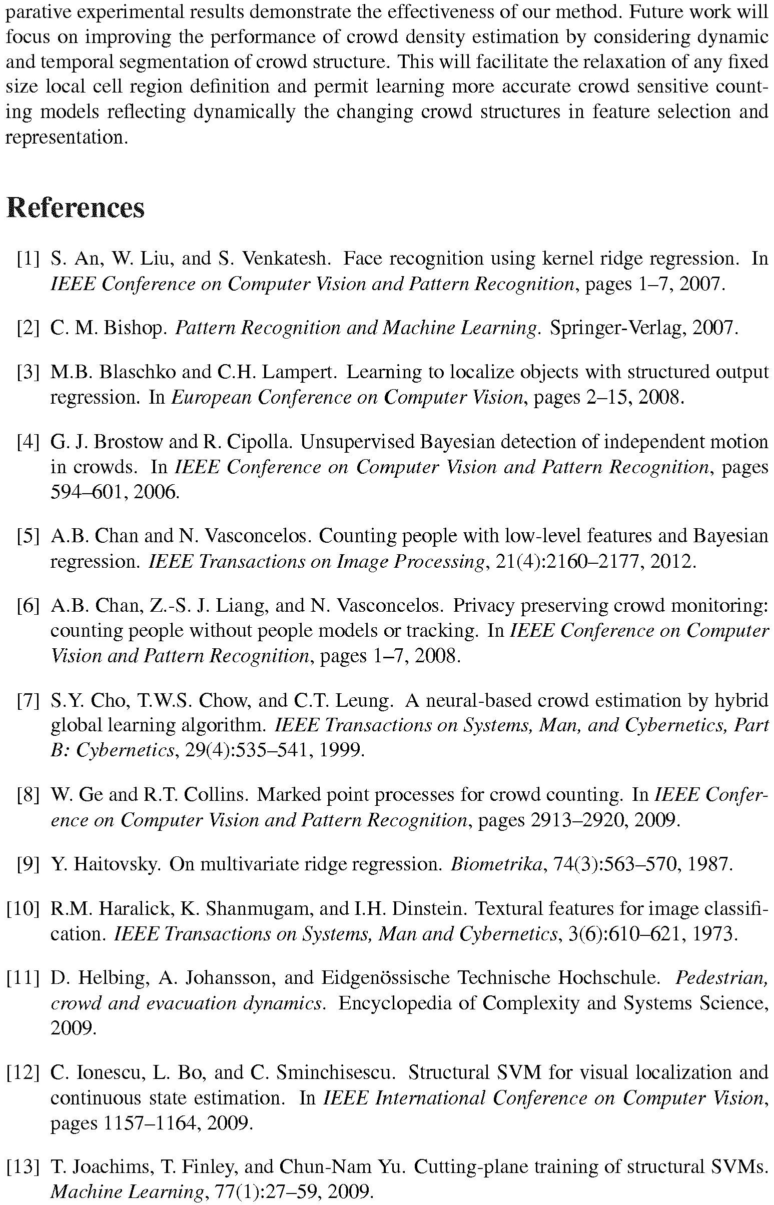

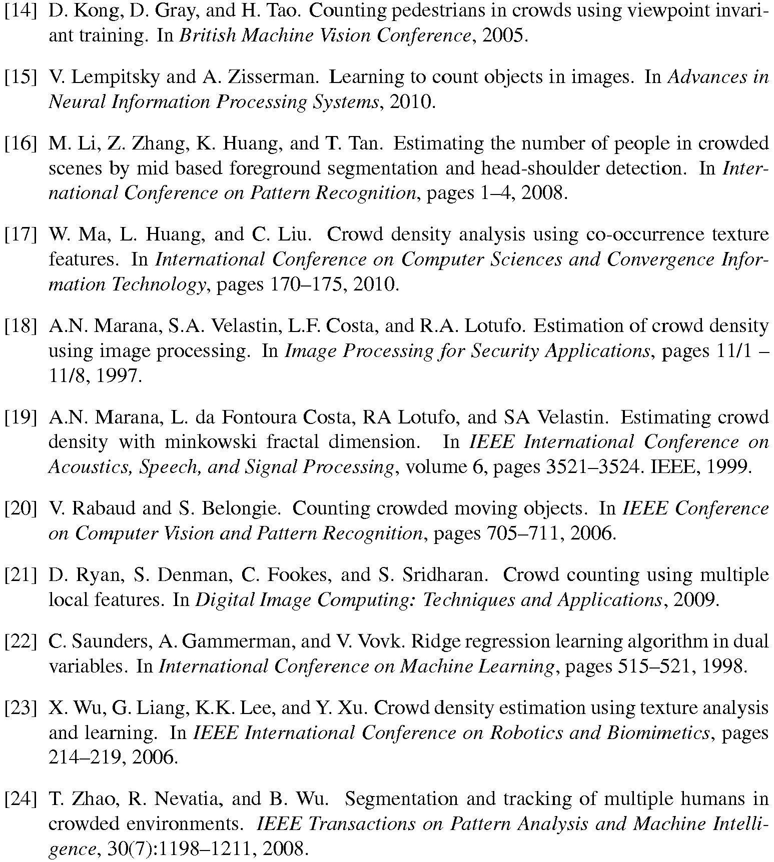

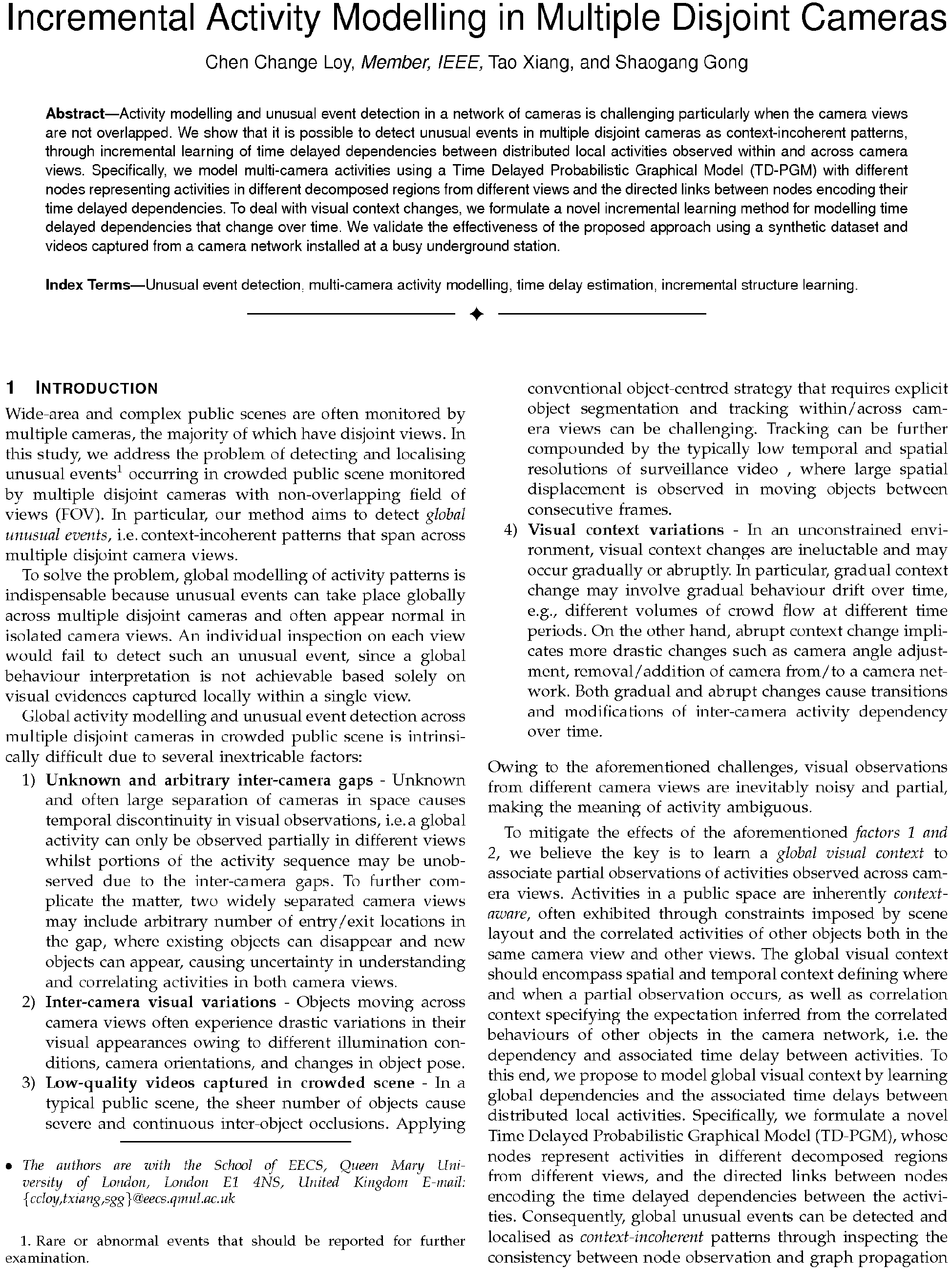

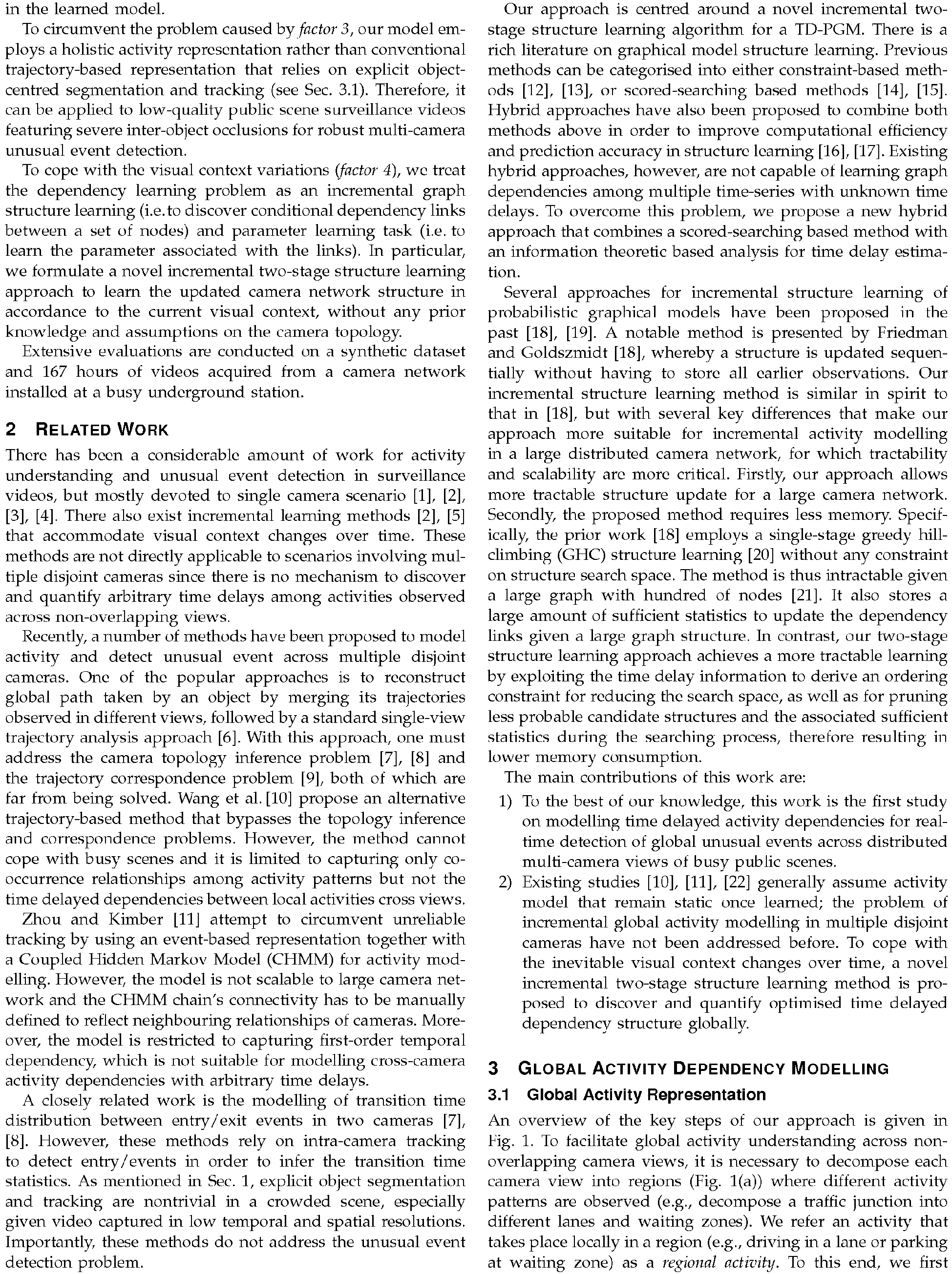

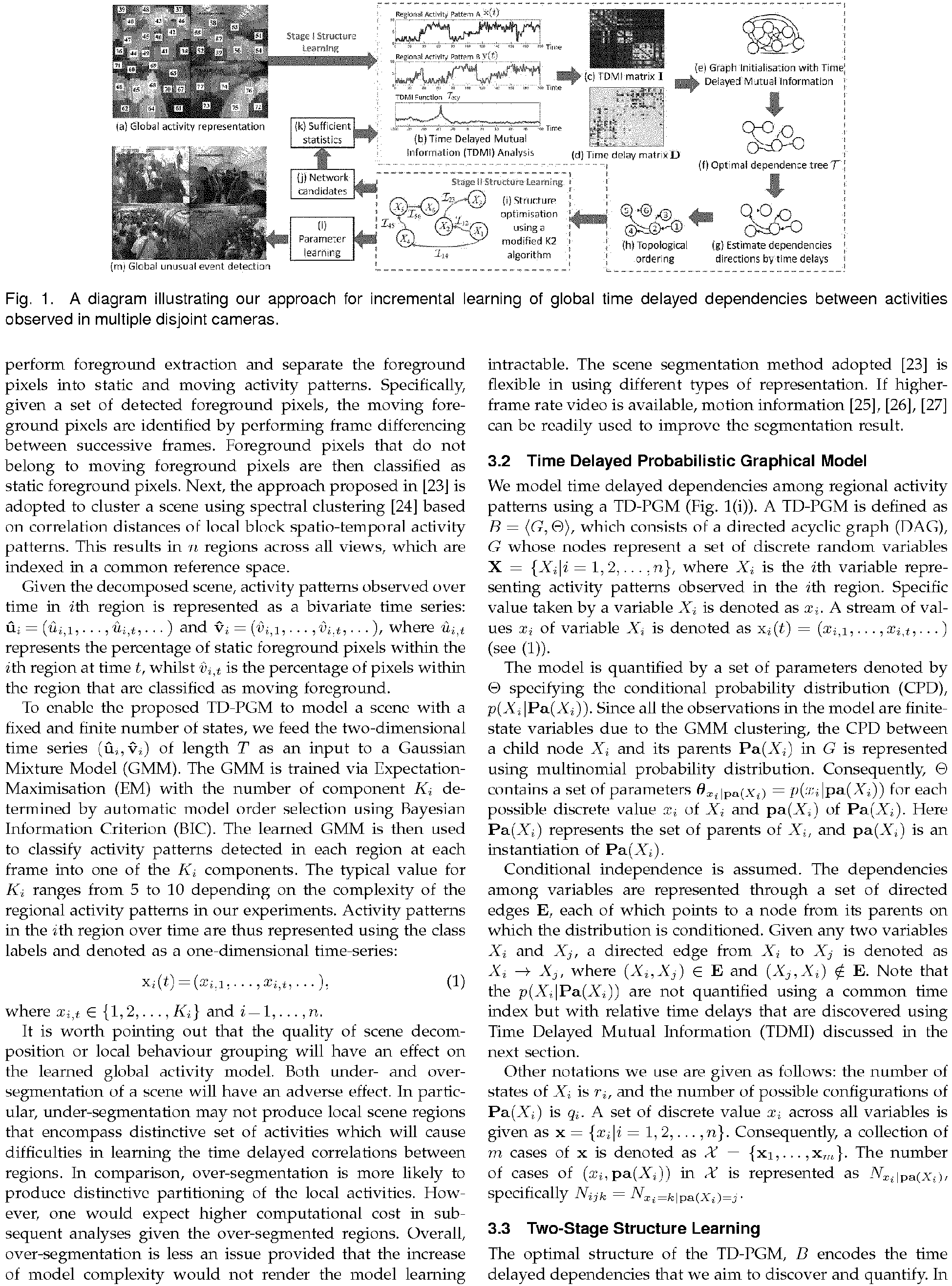

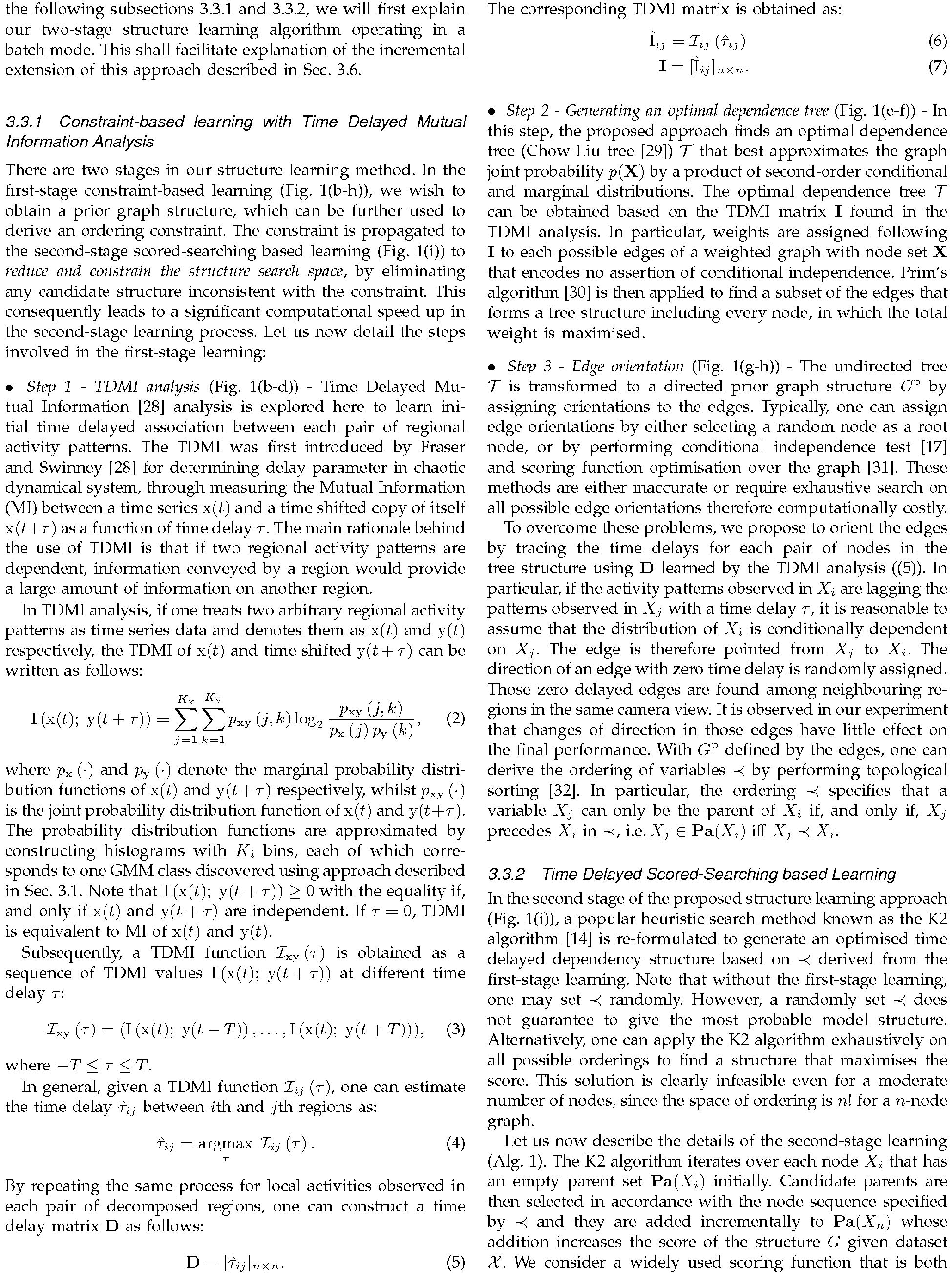

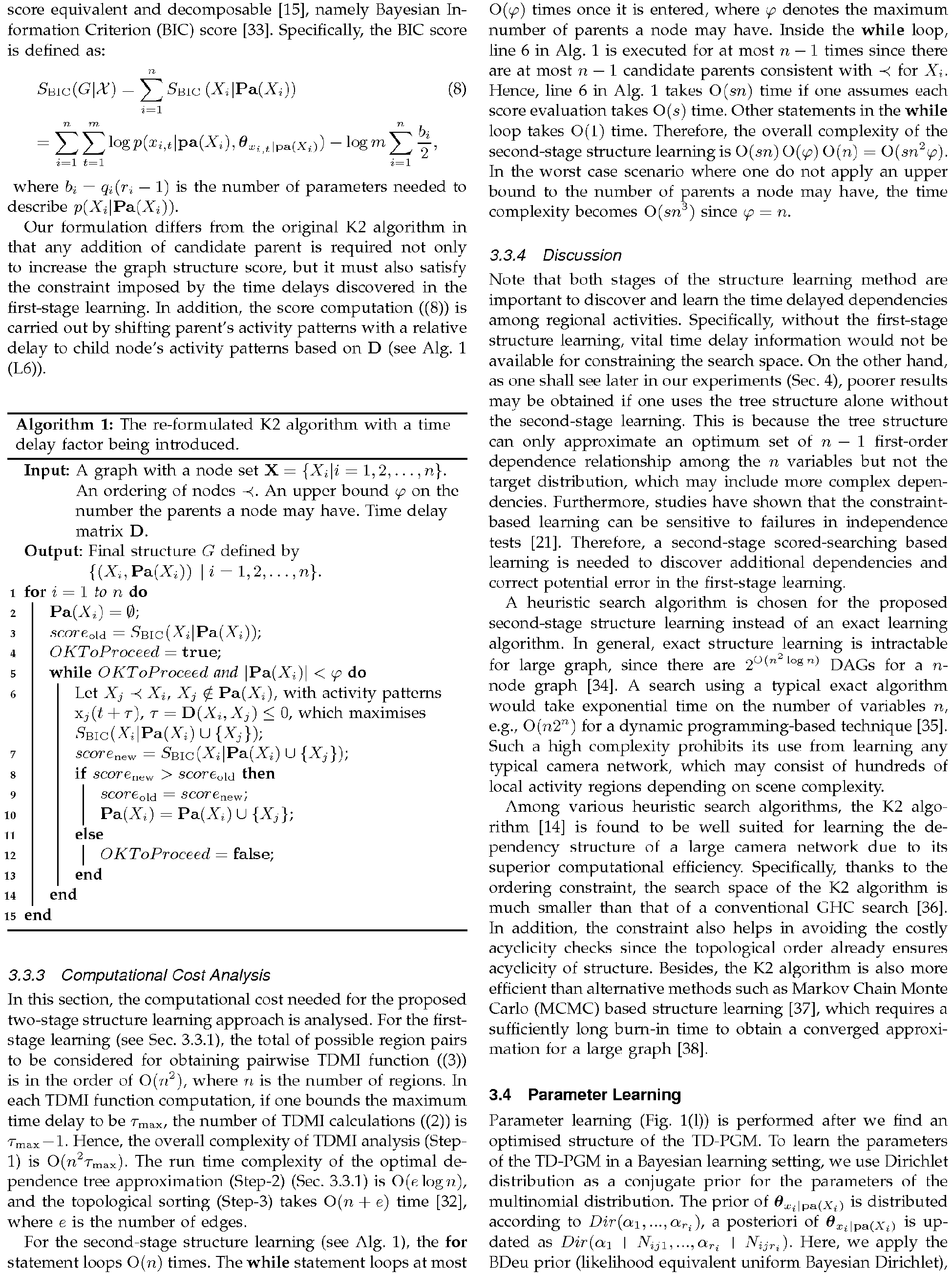

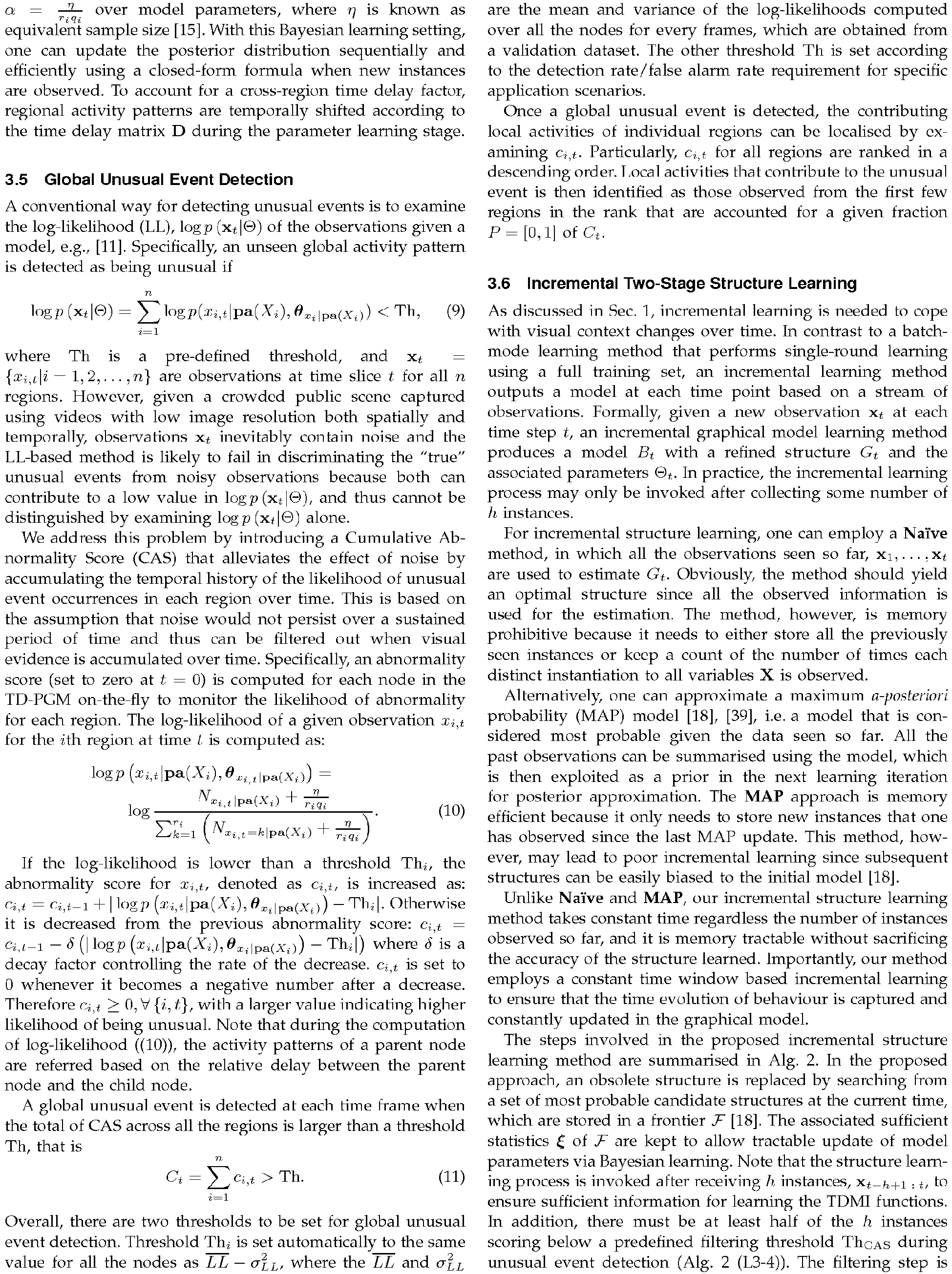

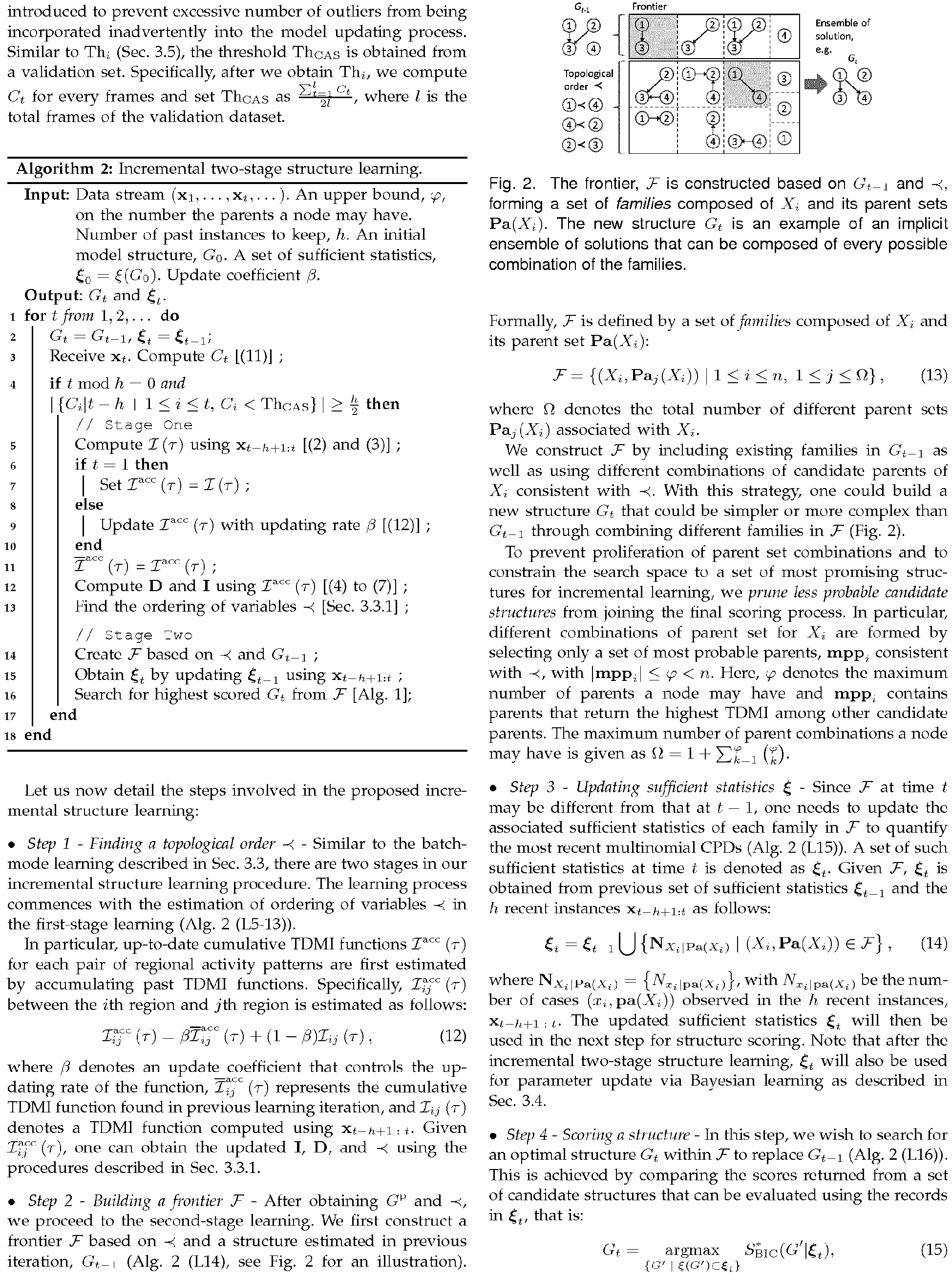

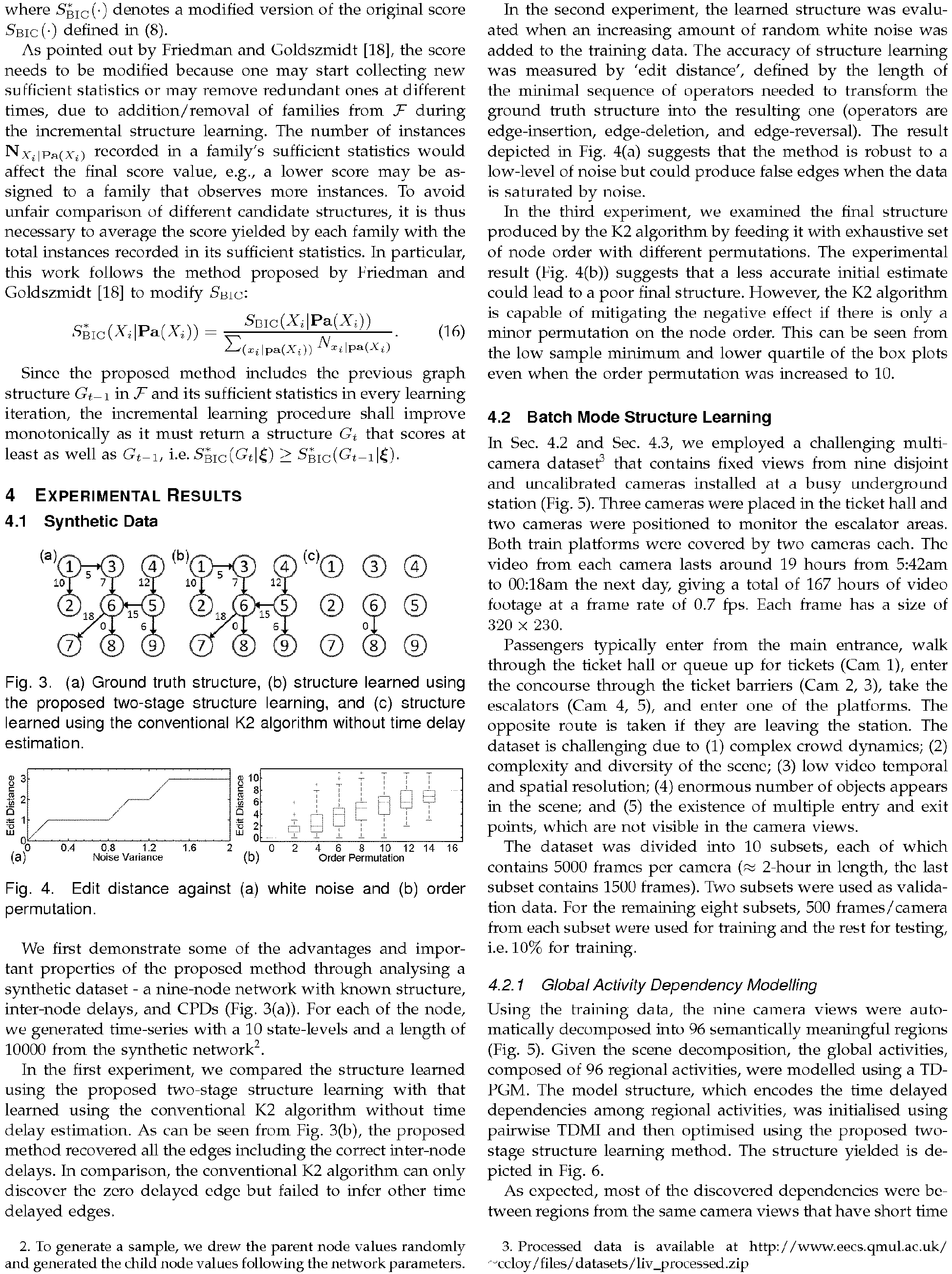

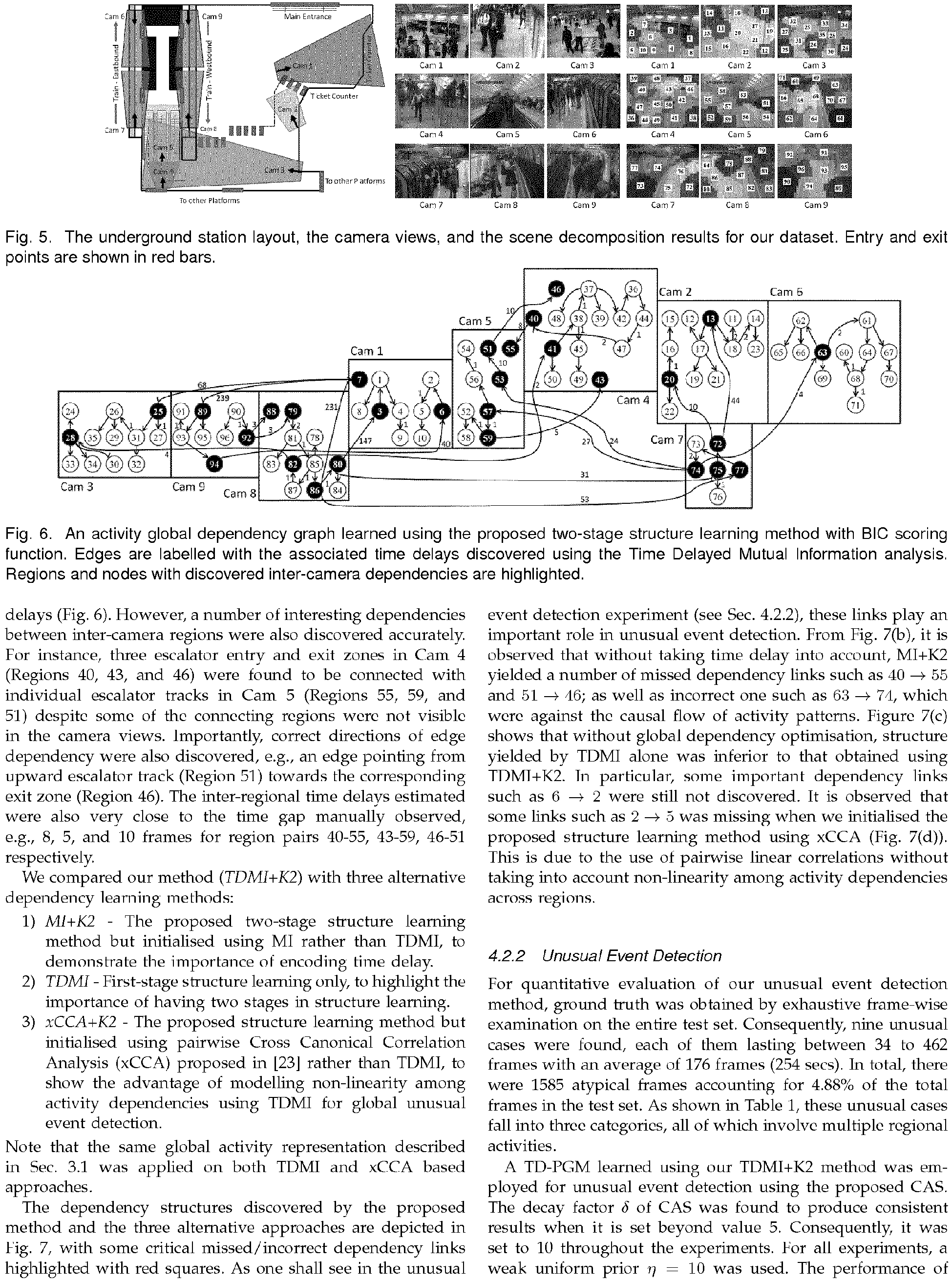

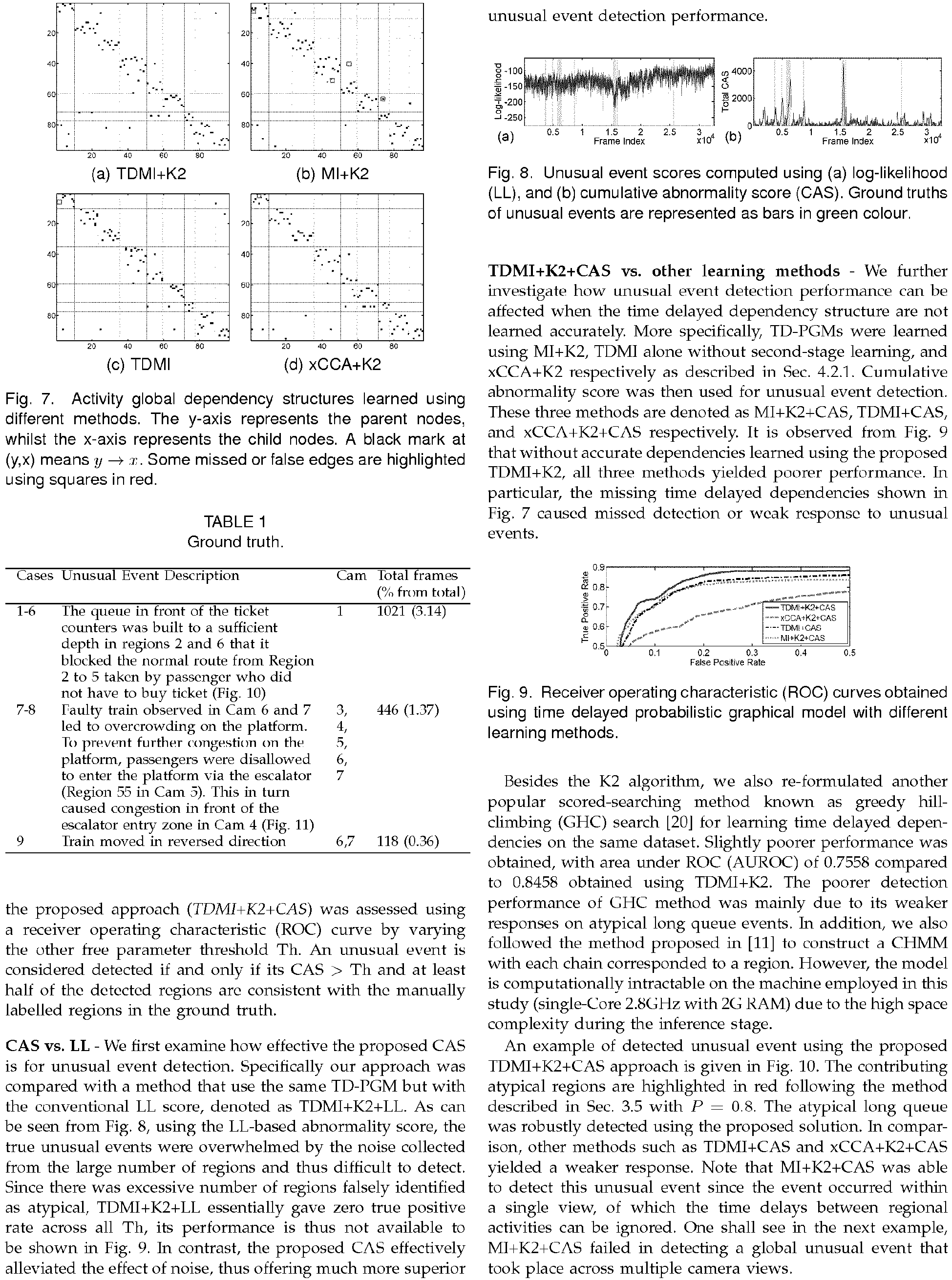

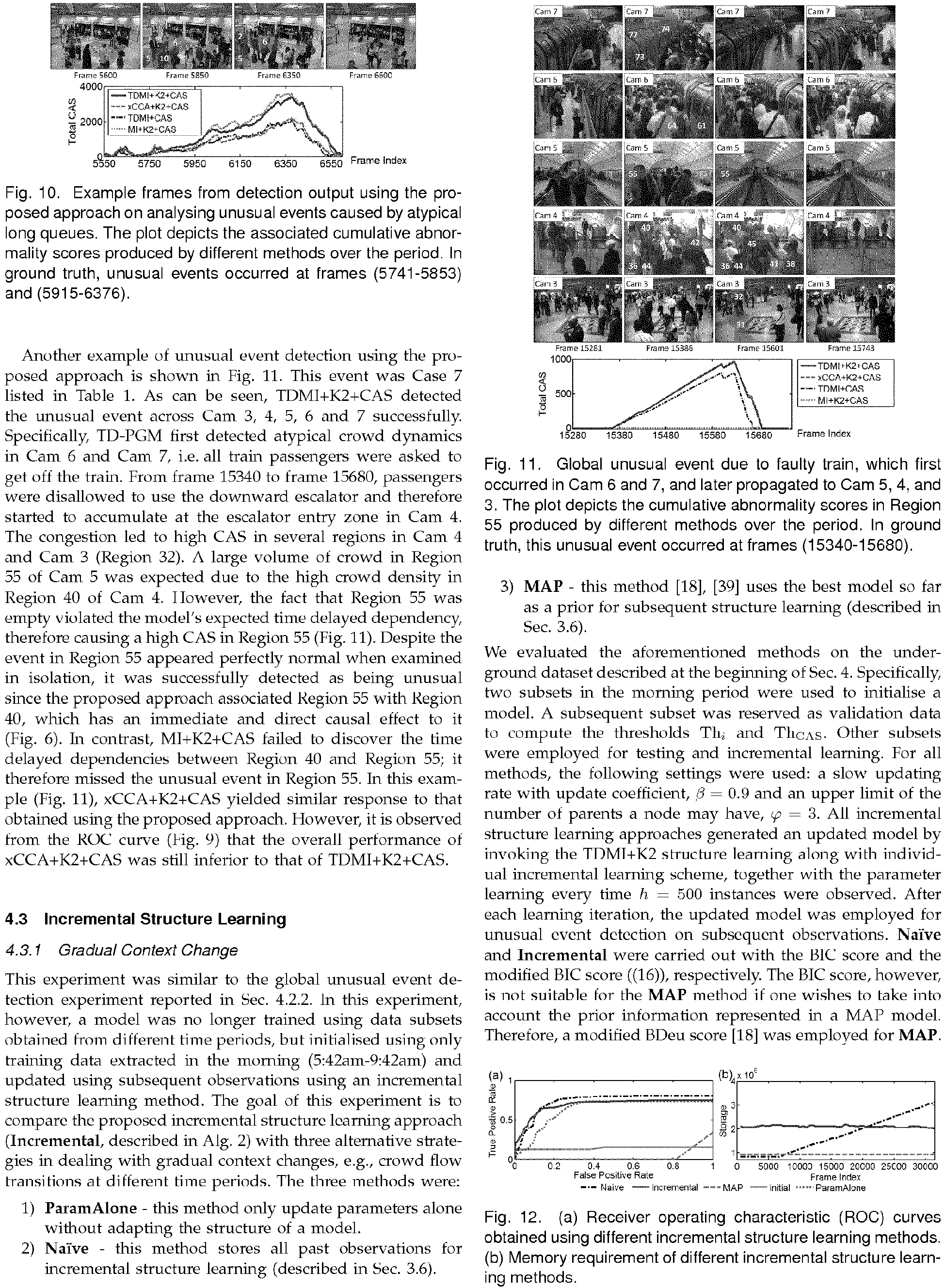

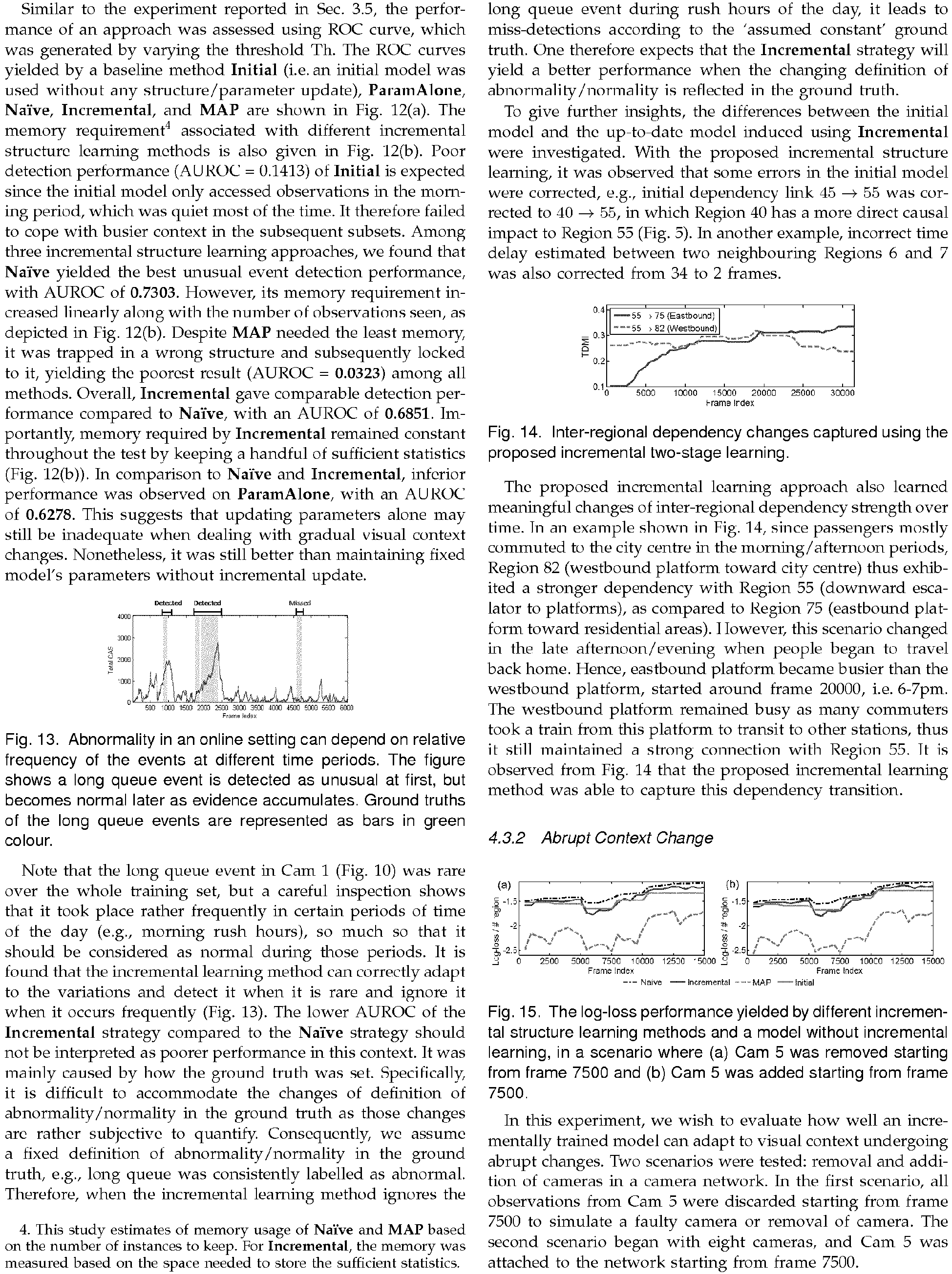

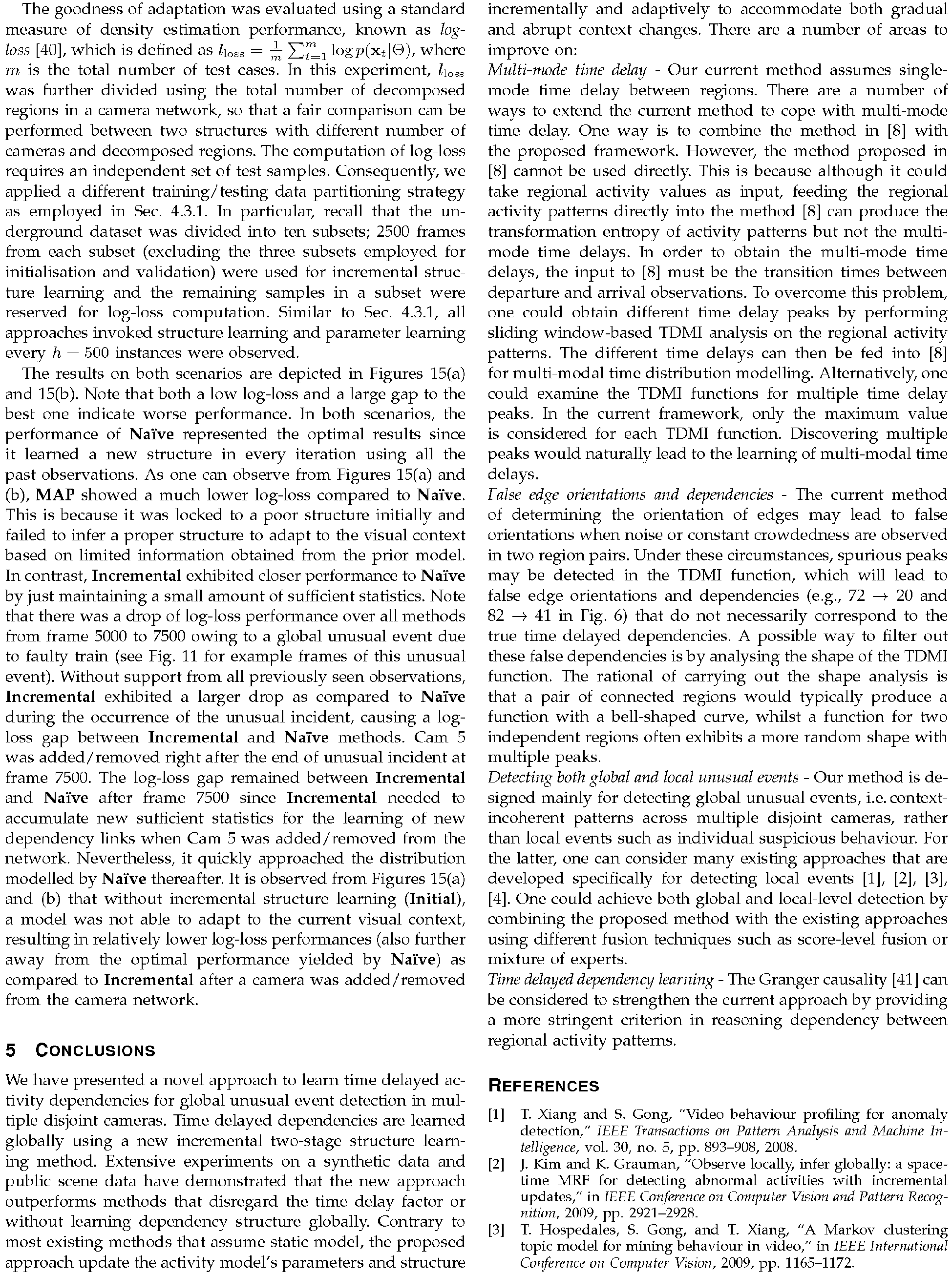

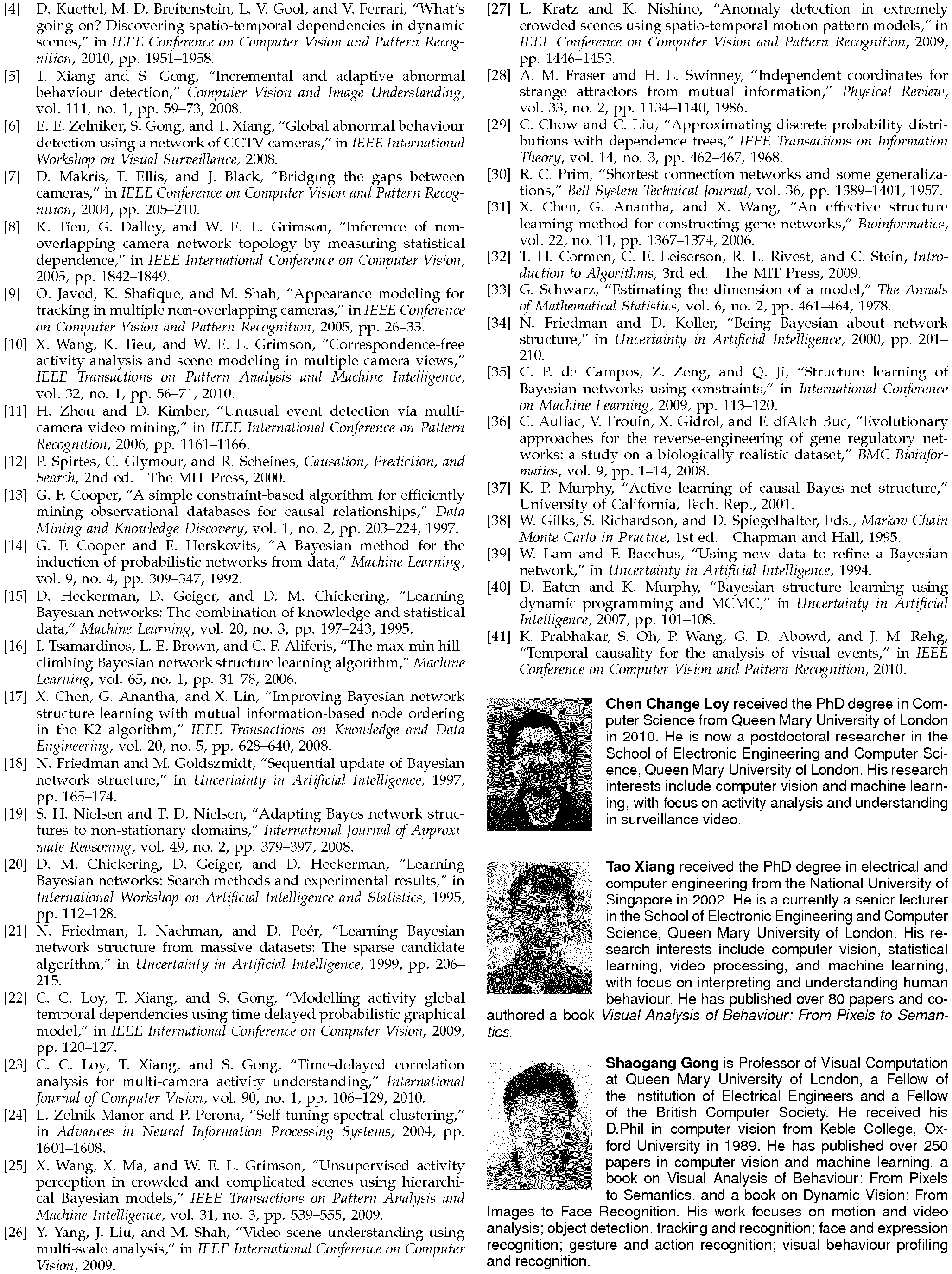

## Claims

1. A method for estimating the size a crowd from a video source comprising the steps of:
determining using an active learning algorithm a candidate for the most informative data point or points;
receiving a label, signal or other indication from a user identifying data of the most informative data point or points;
applying a regression function to the determined most informative point and label to minimise a loss on the labelled data; and
constructing a regression model using the user labelled data and inference-labelled data.

2. The method of claim 1 further comprising the steps of:
extracting one or more features from the video source; and
normalising the scale objects within the video source perceived at different depths.

3. The method of claim 2, wherein the normalising step includes geometric correction.

4. The method according to any previous claim, wherein the active learning algorithm includes measuring label propagation energy in low-dimensional manifold space.

5. The method of claim 4, wherein the active learning algorithm further includes determining one or more unlabelled data points that requires highest energy to reach any of the labelled points and requesting these from the user.

6. The method according to any of claims 1 to 4, wherein the active learning algorithm includes selecting queries from an unlabelled data pool to minimise the variation of the regression model's parameters.

7. The method according to any previous claim further comprising the step of determining unlabelled points by solving a sparse linear system.

8. A system for estimating the size of a crowd comprising:
a video source; and
logic configured to:
determine using an active learning algorithm a candidate for the most informative data point or points;
receive a label, signal or other indication from a user of the most informative data point or points;
apply a regression function to the determined most informative point and label to minimise a loss on the labelled data; and
construct a regression model using the user labelled data and inference-labelled data.

9. The system of claim 8, wherein the logic is further configured to:
extract one or more features from the video source; and
normalise the scale objects within the video source perceived at different depths.

10. The system of claim 9, wherein the normalising step includes geometric correction.

11. The system according to any of claims 8 to 10 further comprising a user interface configured to receive the label from the user.

12. The system according to any of claims 8 to 11, wherein the video source is a camera.

13. A computer program comprising program instructions that, when executed on a computer cause the computer to perform the method of any of claims 1 to 7.

14. A computer-readable medium carrying a computer program according to claim 13.

15. A computer programmed to perform the method of any of claims 1 to 7.
